(19) Europäisches Patentamt
European Patent Office
Office européen des brevets

(11) **EP 4 730 020 A1**

(12) **EUROPEAN PATENT APPLICATION**
published in accordance with Art. 153(4) EPC

(43) Date of publication:
**22.04.2026 Bulletin 2026/17**

(21) Application number: **24823385.0**

(22) Date of filing: **11.06.2024**

(51) International Patent Classification (IPC):
**G02B 30/56** (2020.01)    **G02B 17/00** (2006.01)

(52) Cooperative Patent Classification (CPC):
**G02B 17/00; G02B 30/56**

(86) International application number:
**PCT/JP2024/021243**

(87) International publication number:
**WO 2024/257770 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.06.2023 JP 2023098829**

(71) Applicant: Kyocera Corporation
**Kyoto-shi, Kyoto 612-8501 (JP)**

(72) Inventors:
- **SHIMOSE, Kazuki**
  **Kyoto-shi, Kyoto 612-8501 (JP)**
- **TAMAMURA, Tatsuya**
  **Kyoto-shi, Kyoto 612-8501 (JP)**
- **TADAUCHI, Ryo**
  **Kyoto-shi, Kyoto 612-8501 (JP)**
- **TSUBOTA, Shoichi**
  **Kyoto-shi, Kyoto 612-8501 (JP)**

(74) Representative: **TBK**
**Bavariaring 4-6**
**80336 München (DE)**

(54) **AERIAL IMAGE DISPLAY DEVICE**

(57)     An aerial image display device includes a display and an optical system that forms an aerial image as a real image from image light emitted from the display. In the aerial image display device, a ratio S1/S2 is greater than or equal to 0.58, where S1 is an area obtained by integrating, on a spatial frequency axis, a first modulation transfer function of the aerial image formed by the optical system, and S2 is an area obtained by integrating, on the spatial frequency axis, a second modulation transfer function of an ideal aerial image formed by an ideal optical system being the optical system having a diffraction limited resolution.

FIG. 1

**Description**

TECHNICAL FIELD

The present disclosure relates to an aerial image display device.

BACKGROUND OF INVENTION

A known aerial image display device is described in, for example, Patent Literature 1.

CITATION LIST

PATENT LITERATURE

Patent Literature 1: Japanese Unexamined Patent Application Publication No. 2011-253128

SUMMARY

In one or more aspects of the present disclosure, an aerial image display device includes a display and an optical system. The optical system forms an aerial image as a real image from image light emitted from the display. A ratio S1/S2 is greater than or equal to 0.58, where S1 is an area obtained by integrating, on a spatial frequency axis, a first modulation transfer function of the aerial image formed by the optical system, and S2 is an area obtained by integrating, on the spatial frequency axis, a second modulation transfer function of an ideal aerial image formed by an ideal optical system being the optical system having a diffraction limited resolution.

BRIEF DESCRIPTION OF THE DRAWINGS

The objects, features, and advantages of the present disclosure will become more apparent from the following detailed description and the drawings.

FIG. 1 is a cross-sectional view of an aerial image display device according to one embodiment of the present disclosure.
FIG. 2 is a cross-sectional view of an aerial image display device according to another embodiment of the present disclosure.
FIG. 3 is a graph of an example modulation transfer function.
FIG. 4 is a diagram of an example aerial image viewed by a user of the aerial image display device in FIG. 1.
FIG. 5 is a diagram illustrating the definition of the curvature of a first concave mirror.
FIG. 6 is a perspective view of a measurement system that calculates a modulation transfer function of an aerial image formed by the aerial image display device.
FIG. 7 is a diagram of an example test pattern for calculating the modulation transfer function.
FIG. 8 is a diagram of a captured image of the test pattern captured with an imaging device.
FIG. 9 is a partially enlarged view of the captured image of the test pattern captured with the imaging device.
FIG. 10 is a graph of a luminance distribution waveform calculated based on the captured image in FIG. 9.
FIG. 11 is a diagram of another example test pattern for calculating the modulation transfer function.
FIG. 12 is a partially enlarged view of a captured image of the test pattern captured with the imaging device.
FIG. 13 is a side view of the imaging device being defocused.
FIG. 14 is a partially enlarged view of an example captured image of the test pattern captured with the imaging device.
FIG. 15 is a partially enlarged view of an example captured image of the test pattern captured with the imaging device.
FIG. 16 is a diagram of an example captured image of the test pattern captured with the imaging device.
FIG. 17 is a graph showing focus positions each corresponding to an imaging portion.
FIG. 18 is a diagram illustrating an optical axis deviation corresponding to the graph in FIG. 17.
FIG. 19 is a graph showing focus positions each corresponding to an imaging portion.
FIG. 20 is a diagram illustrating an optical axis deviation corresponding to the graph in FIG. 19.
FIG. 21 is a diagram illustrating rotation of the imaging device.
FIG. 22 is a graph showing the relationship between an MTF area S1 of an aerial image formed by an optical system and the sharpness (width ratio W/Q or (half width)/(1/4 width)) of a luminance distribution waveform of the aerial image when the imaging device has an F value of 3.
FIG. 23 is a graph showing the relationship between the MTF area S1 of an aerial image formed by the optical system and the sharpness (width ratio W/Q or (half width)/(1/4 width)) of the luminance distribution waveform of the aerial image when the imaging device has an F value of 8.

DESCRIPTION OF EMBODIMENTS

A known aerial image display device is configured to form an aerial image as a real image from image light emitted from a display panel, using optical members such as a polarizing filter and a beam splitter. The known aerial image display device may form an aerial image having a low resolution or a low luminance level.

One or more embodiments of the present disclosure will now be described with reference to the drawings. The drawings used hereafter are schematic and are not necessarily drawn to scale relative to the actual size of each component. Some of the figures herein use an orthogonal XYZ coordinate system defined for convenience. An X-direction is also referred to as a first direction or a height direction. A Y-direction is also referred to as a second direction or a width direction (a horizontal direction or a lateral direction). A Z-direction is also referred to as a third direction or a depth direction.

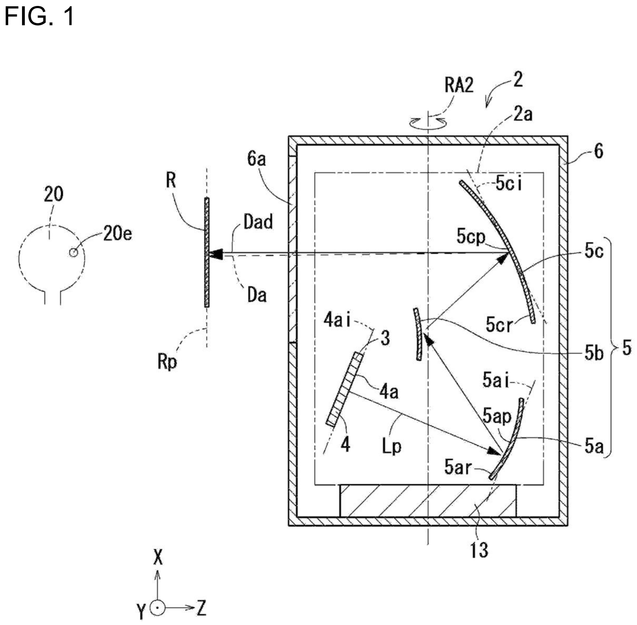

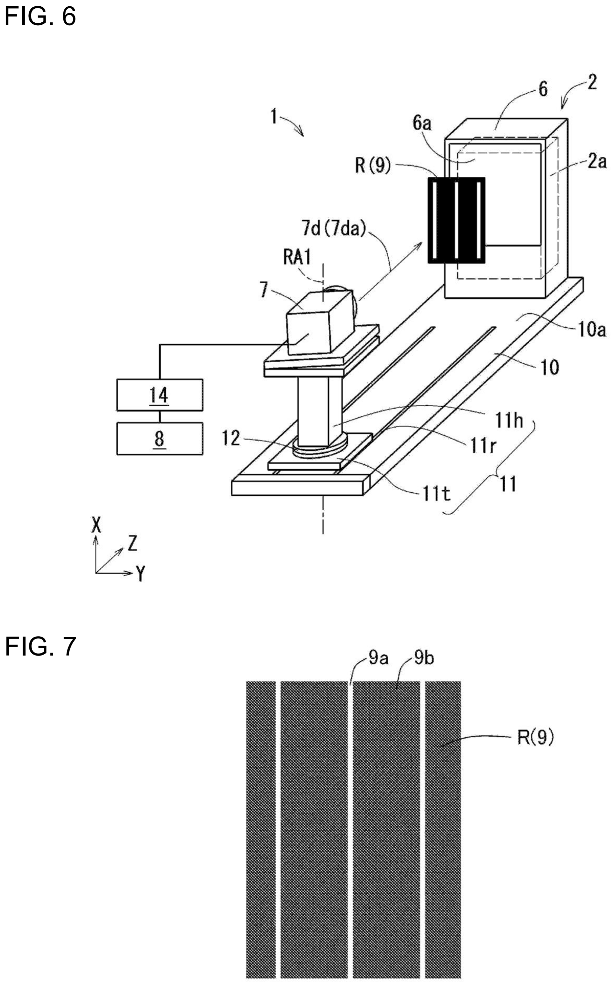

FIGs. 1 to 23 are diagrams and graphs illustrating an aerial image display device according to one embodiment of the present disclosure. For ease of illustration, FIGs. 7 to 9, 11, 12, and 14 to 16 illustrate second strip images (black images) with luminance levels higher than the actual luminance level.

In an embodiment of the present disclosure, an aerial image display device 2 includes a display 3 and an optical system 5 as illustrated in FIG. 1.

The display 3 includes a display panel 4. The display panel 4 includes a display surface 4a to display an image formed as an aerial image R. More specifically, the display panel 4 emits, from the display surface 4a, image light Lp formed as the aerial image R. The display panel 4 may be a transmissive display panel or a self-luminous display panel. When the display panel 4 is a transmissive display panel, the display 3 may include an illuminator such as a backlight. When the display panel 4 is a self-luminous display panel, the display 3 may include no illuminator.

The transmissive display panel may be a liquid crystal panel. The transmissive display panel may have a structure of a known liquid crystal panel. The known liquid crystal panel may be an in-plane switching (IPS) panel, a fringe field switching (FFS) panel, a vertical alignment (VA) panel, an electrically controlled birefringence (ECB) panel, or any of various other liquid crystal panels. The transmissive display panel may be a microelectromechanical systems (MEMS) shutter display panel other than a liquid crystal panel. The self-luminous display panel may include multiple self-luminous elements. The self-luminous elements may be any of various self-luminous elements including, for example, light-emitting diode (LED) elements, organic electroluminescent (EL) elements, and inorganic EL elements.

The optical system 5 forms the aerial image R as a real image from the image light Lp emitted from the display 3. The optical system 5 may include a reflector such as a concave mirror or a convex mirror. As illustrated in FIG. 1, the optical system 5 may include a first concave mirror 5a, a convex mirror 5b, and a second concave mirror 5c.

The first concave mirror 5a is configured to reflect, in a direction different from a direction toward the display 3, the image light Lp emitted from the display 3. The first concave mirror 5a may be a freeform concave mirror. The first concave mirror 5a is not limited to a freeform concave mirror, and may be a spherical concave mirror or an aspherical concave mirror.

The convex mirror 5b is configured to reflect, in a direction different from a direction toward the first concave mirror 5a, the image light Lp reflected by the first concave mirror 5a. The convex mirror 5b may be a freeform convex mirror. The convex mirror 5b is not limited to a freeform convex mirror, and may be a spherical convex mirror or an aspherical convex mirror.

The second concave mirror 5c is configured to reflect, in a direction different from a direction toward the convex mirror 5b, the image light Lp reflected by the convex mirror 5b and form the aerial image R from the image light Lp. The second concave mirror 5c may be a freeform concave mirror. The second concave mirror 5c is not limited to a freeform concave mirror, and may be a spherical concave mirror or an aspherical concave mirror.

In the aerial image display device 2, the first concave mirror 5a and the second concave mirror 5c may face each other in a manner tilted with respect to each other as illustrated in FIG. 1. The display panel 4 may be located between the first concave mirror 5a and the second concave mirror 5c. The display surface 4a of the display panel 4 may be tilted with respect to a reflective surface (also referred to as a first reflective surface) 5ar of the first concave mirror 5a by a lesser degree than with respect to a reflective surface (also referred to as a second reflective surface) 5cr of the second concave mirror 5c. The first concave mirror 5a and the second concave mirror 5c facing each other in a manner tilted with respect to each other and the display panel 4 located between the first concave mirror 5a and the second concave mirror 5c allow size reduction of the aerial image display device 2. In particular, this reduces the dimension of the aerial image display device 2 in a vertical direction (the X-direction in FIG. 1). The display surface 4a of the display panel 4 tilted with respect to the first reflective surface 5ar of the first concave mirror 5a by a lesser degree than with respect to the second reflective surface 5cr of the second concave mirror 5c is nearly parallel to the first reflective surface 5ar. A light beam of the image light Lp emitted from the display surface 4a is thus incident on the first reflective surface 5ar at a smaller angle, reducing distortion of the aerial image R and increasing the luminance of the aerial image R. The tilt of the display surface 4a of the display panel 4 with respect to the first reflective surface 5ar of the first concave mirror 5a may be defined by a tilt angle of the display surface 4a (or a virtual plane 4ai including the display surface 4a in a space) with respect to a tangent plane tangent to a vertex 5ap of the first curved reflective surface 5ar (or a virtual plane 5ai including the tangent plane in the space). In the same or a similar manner, the tilt of the display surface 4a of the display panel 4 with respect to the second reflective surface 5cr of the second concave mirror 5c may be defined by a tilt angle of the display surface 4a (or the virtual plane 4ai including the display surface 4a in the space) with respect to a tangent plane tangent to a vertex 5cp of the second curved reflective surface 5cr (or a virtual plane 5ci including the tangent plane in the space).

In the above structure, the convex mirror 5b may be located between the first concave mirror 5a and the second concave mirror 5c. This reduces the size of the optical system 5 in the aerial image display device 2. In particular, this reduces the dimension of the optical system 5 in the vertical direction. Further, the convex mirror 5b may be closer to the first concave mirror 5a and the second concave mirror 5c than the display panel 4. This further reduces the size of the optical system 5 in the aerial image display device 2. In particular, this reduces the dimension of the optical system 5 in the lateral direction (Z-direction in FIG. 1).

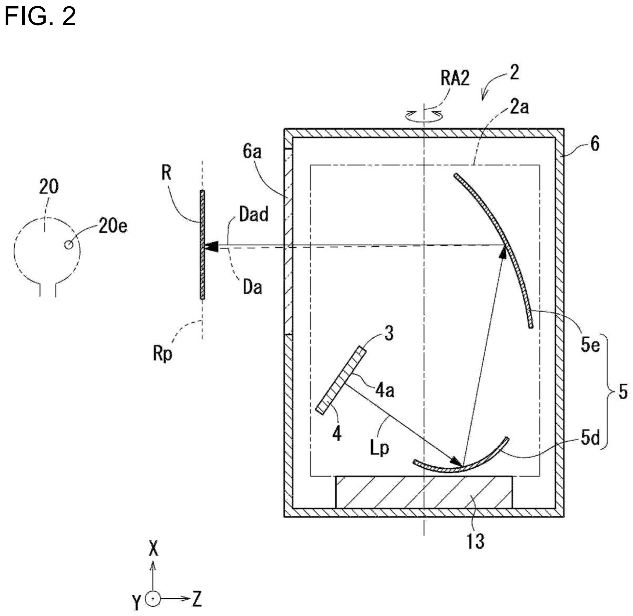

The aerial image display device 2 may have a structure other than the structure illustrated in FIG. 1. As illustrated in FIG. 2, an optical system 5 may include a first concave mirror 5d and a second concave mirror 5e.

The first concave mirror 5d is configured to reflect, in a direction different from the direction toward a display 3, image light Lp emitted from the display 3. The first concave mirror 5d may be a freeform concave mirror. The first concave mirror 5d is not limited to a freeform concave mirror, and may be a spherical concave mirror or an aspherical concave mirror.

The second concave mirror 5e is configured to reflect, in a direction different from a direction toward the first concave mirror 5d, the image light Lp reflected by the first concave mirror 5d and form an aerial image R from the image light Lp. The second concave mirror 5e may be a freeform concave mirror. The second concave mirror 5e is not limited to a freeform concave mirror, and may be a spherical concave mirror or an aspherical concave mirror.

In the aerial image display device 2, the first concave mirror 5d may have a greater curvature than the second concave mirror 5e as illustrated in FIG. 2. The first concave mirror 5d and the second concave mirror 5e may face each other in a manner tilted with respect to each other. A display panel 4 may be located between the first concave mirror 5d and the second concave mirror 5e. The first concave mirror 5d with a greater curvature than the second concave mirror 5e allows the display panel 4 to be closer to the first concave mirror 5d. This reduces the size of the aerial image display device 2. In particular, this reduces the dimension of the aerial image display device 2 in the lateral direction. The display panel 4 is located between the first concave mirror 5d and the second concave mirror 5e. This further reduces the size of the aerial image display device 2. In particular, this reduces the dimension of the aerial image display device 2 in the vertical direction.

A reflective surface of a freeform concave mirror and a reflective surface of a freeform convex mirror as freeform surfaces may each be an XY polynomial surface (also referred to as an SPS XYP surface) defined by Formulas 1 and 2 below. The XY polynomial surface is expressed by polynomials of up to the tenth degree to be added to a conic reference surface. In Formulas 1 and 2, the sum of m and n is thus less than or equal to 10. In Formula 1, z is an amount of sag of a surface parallel to a Z-axis (optical axis), c is a vertex curvature, r is a distance in a radial direction (more specifically, $r^2 = x^2 + y^2$), k is a conic constant, and Cj is a coefficient of a monomial $x^m y^n$.

$$z = \frac{cr^2}{1 + \sqrt{1 - (1+k)c^2 r^2}} + \sum_{j=2}^{66} C_j x^m y^n \quad (1)$$

$$j = \frac{(m+n)^2 + m + 3n}{2} + 1 \quad (2)$$

The aerial image display device 2 may include a housing 6 as illustrated in FIGs. 1 and 2. The aerial image display device 2 may include components 2a, such as the display 3 and the optical system 5, located in the housing 6. The components 2a may include, for example, a circuit board, a wire, a cable, a heat dissipator such as a heat sink, a holder for holding the optical system 5, and an adjuster for adjusting the position of the optical system 5. The housing 6 may be made of, for example, a resin material, a metal material, or a ceramic material.

The housing 6 at least partially includes, as a portion facing a user of the aerial image display device 2, an image light emitting portion 6a. The image light Lp formed as the aerial image R is emitted from the inside of the housing 6 to the outside of the housing 6 through the image light emitting portion 6a. The image light emitting portion 6a may include, for example, a light-blocking film or a light-blocking glass plate. In this case, the components 2a in the housing 6 are less visible to a user 20 using the aerial image display device 2, improving visibility of the aerial image R.

The resolution of an aerial image R can be expressed by a modulation transfer function (MTF). The modulation transfer function is a performance index for evaluating the resolution of the optical system 5, and can be used as a resolution index for comparing the resolutions of aerial images R. The modulation transfer function is a function of a spatial frequency $\nu$ (1/mm), and is maximum at $\nu = 0$. The modulation transfer function may be normalized to a maximum value of 1. In this case, a value of the modulation transfer function closer to 1 indicates that the optical system 5 (or the aerial image R) has a higher resolution. Note that an area obtained by integrating the modulation transfer function on a spatial frequency axis may be used as the performance index of the optical system 5 to evaluate the resolution of the optical system 5 (or the resolution of an aerial image R) with high accuracy, although the value of the modulation transfer function may be used as the performance index of the optical system 5.

The optical system 5 unavoidably undergoes resolution degradation due to diffraction of light, and also undergoes resolution degradation due to, for example, manufacturing tolerances or positioning errors of the reflectors included in the optical system 5. The aerial image R formed by the optical system 5 thus has a resolution degraded by the above factors. An ideal optical system has the same structure as or a similar structure to the optical system 5, but has a diffraction limited resolution. In other words, an ideal optical system unavoidably undergoes resolution degradation due to diffraction of light alone. An ideal aerial image formed by the ideal optical system has a theoretically minimized degraded resolution. Note that, for the diffraction limit, for example, a light beam from a point light source focused to a single focal point in a geometrical-optical manner by an aberration-free optical system in a vacuum spreads by a specific degree due to the property of light waves. The light has an angular spread of about $1.22\,\lambda/D$ (radian) $= 2.5 \times 10^5\,\lambda/D$ (second), where $\lambda$ is the wavelength of light, and D is the diameter of an optical element (e.g., a lens). This spread is referred to as the diffraction limit.

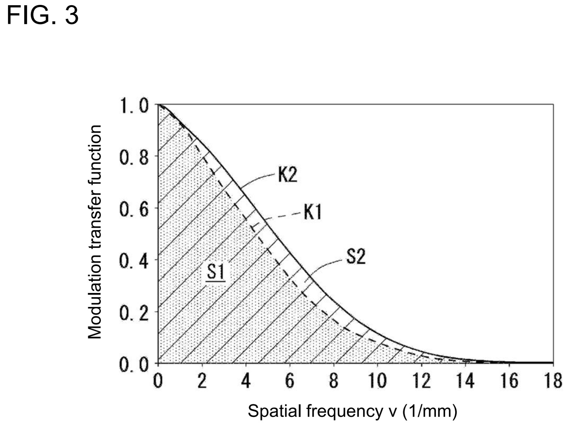

FIG. 3 is a graph of an example modulation transfer function. In the graph in FIG. 3, the dashed line indicates a modulation transfer function (hereafter also referred to as a first modulation transfer function) K1 of the aerial image R formed by the optical system 5, and the solid line indicates a modulation transfer function (hereafter also referred to as a second modulation transfer function) K2 of the ideal aerial image formed by the ideal optical system. As shown in FIG. 3, the first modulation transfer function K1 is less than the second modulation transfer function K2. Thus, an area (hereafter also referred to as an MTF area) S1 obtained by integrating the first modulation transfer function K1 on the spatial frequency axis is smaller than an area S2 obtained by integrating the second modulation transfer function K2 on the spatial frequency axis, and an area ratio S1/S2 is less than 1. An area ratio S1/S2 closer to 1 indicates that the aerial image R actually formed by the aerial image display device 2 has a higher resolution.

In the aerial image display device 2, the ratio S1/S2 is greater than or equal to 0.85, where S1 is an area obtained by integrating, on the spatial frequency axis, the first modulation transfer function K1 of the aerial image R formed by the optical system 5, and S2 is an area obtained by integrating, on the spatial frequency axis, the second modulation transfer function K2 of the ideal aerial image formed by the ideal optical system, which is the optical system 5 having a diffraction limited resolution. The aerial image display device 2 can thus reduce resolution degradation.

The modulation transfer function can be calculated using a measurement system 1 (described later). The measurement system 1 includes an imaging device 7 that can capture the aerial image R. The modulation transfer function can be calculated based on captured image data of the aerial image R output from the imaging device 7.

The first modulation transfer function K1 and the second modulation transfer function K2 may be normalized to a maximum value of 1. In this case, when the aerial image R is captured with the imaging device 7 with an aperture value being set to 8, the area S1 obtained by integrating the first modulation transfer function K1 on the spatial frequency axis may be greater than or equal to 6. This improves the resolution of the aerial image R when the aerial image R is viewed with eyes 20e of the user 20. When the aerial image R is captured with the imaging device 7 with the aperture value being set to 3, the area S1 obtained by integrating the first modulation transfer function K1 on the spatial frequency axis may be greater than or equal to 12.7. This allows the user 20 to view the aerial image R with reduced resolution degradation and a smaller optical axis deviation. Note that an optical axis deviation refers to a deviation of an actual optical axis direction Da of the aerial image R formed by the aerial image display device 2 from a designed optical axis direction Dad of the aerial image R formed by the aerial image display device 2 (refer to FIGs. 1 and 2).

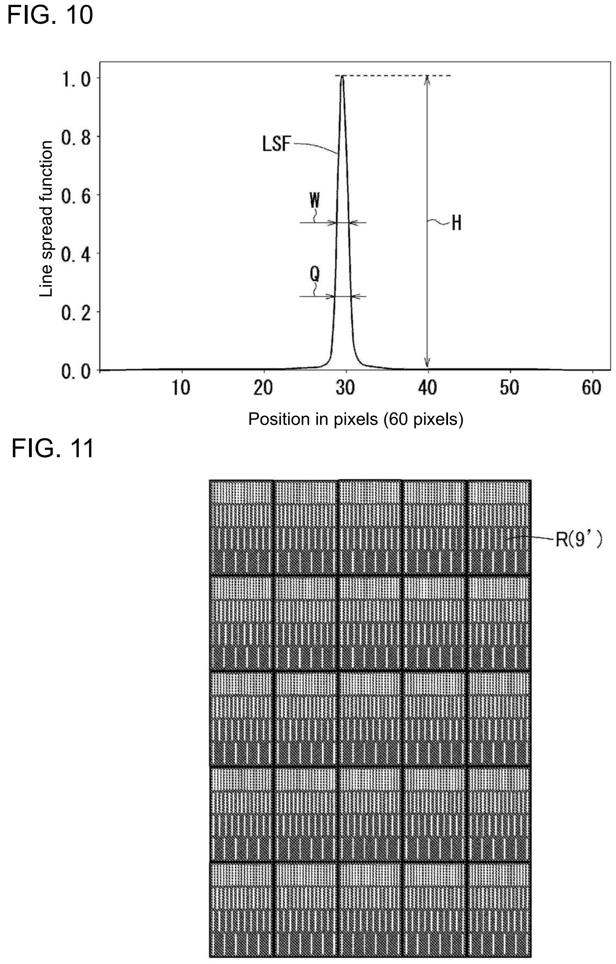

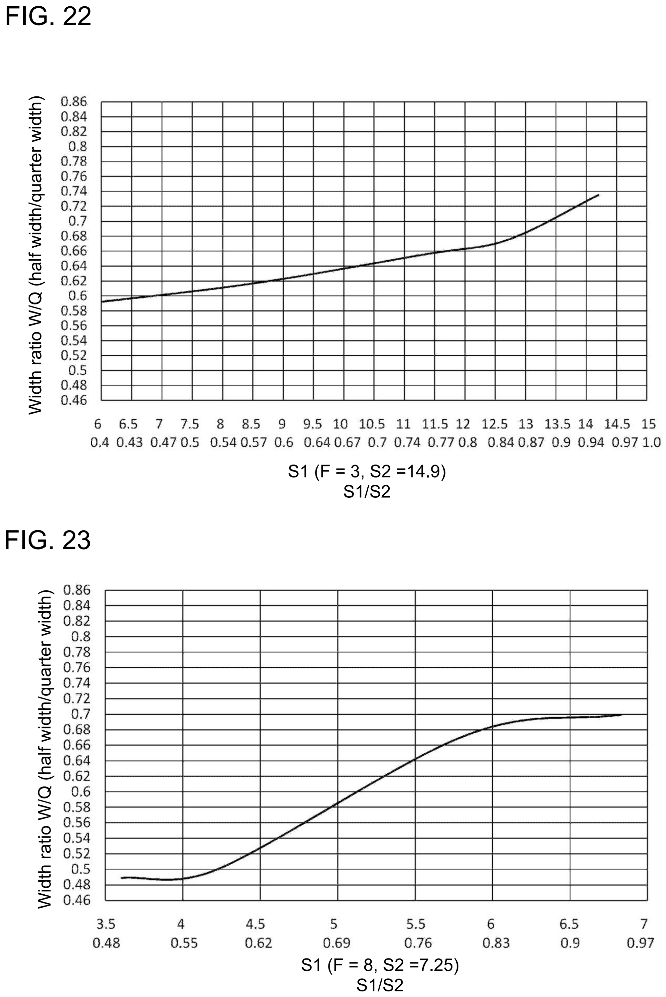

FIG. 23 is a graph showing the relationship between the MTF area S1 of the aerial image R formed by the optical system 5 and a width ratio W/Q representing the sharpness of a luminance distribution waveform of the aerial image R when the imaging device 7 has an F value (aperture value) of 8. The luminance distribution waveform is also referred to as a line spread function (LSF) shown in FIG. 10. W is the half width of the LSF shown in FIG. 10. Q is the 1/4 width (hereafter also referred to as the quarter width or the half of the half width) of the LSF shown in FIG. 10. More specifically, the width ratio W/Q is (half width)/(1/4 width), and is a ratio of the half width W to the quarter width Q of the line spread function shown in FIG. 10. In the graph in FIG. 23, the upper numbers on the horizontal axis indicate the values of the MTF area S1, and the lower numbers on the horizontal axis indicate the values of the area ratio S1/S2. The value of the area S2 is 7.25. For the imaging device 7 with the F value of 8, a light receiver (lens aperture) in the imaging device 7 has a small area. The aerial image R is thus more likely to have a low contrast. In other words, the sharpness of the luminance distribution waveform is more likely to decrease, and the value of the MTF area S1 of the aerial image R is generally more likely to be lesser. When the value of the MTF area S1 of the aerial image R is lesser, or in other words, when the aerial image R has a lower contrast, the sharpness of the luminance distribution waveform tends to decrease further. As shown in FIG. 23, the sharpness of the luminance distribution waveform steeply increases when the MTF area S1 of the aerial image R is greater than or equal to about 4.2. Thus, the ratio S1/S2 (S2 = 7.25) is greater than or equal to about 0.58 when the value of S1 is greater than or equal to about 4.2.

FIG. 22 is a graph showing the relationship between the MTF area S1 of the aerial image R formed by the optical system 5 and the width ratio W/Q representing the sharpness of the luminance distribution waveform of the aerial image R when the imaging device 7 has an F value of 3. In the graph in FIG. 22, the upper numbers on the horizontal axis indicate the values of the MTF area S1, and the lower numbers on the horizontal axis indicate the values of the area ratio S1/S2. The value of the area S2 is 14.9. For the imaging device 7 with the F value of 3, the light receiver (lens aperture) in the imaging device 7 has a large area. The aerial image R is thus more likely to have a high contrast. In other words, the sharpness of the luminance distribution waveform is more likely to increase, and the value of the MTF area S1 of the aerial image R is generally more likely to be greater. When the value of the MTF area S1 of the aerial image R is greater, or in other words, when the aerial image R has a higher contrast, the sharpness of the luminance distribution waveform tends to increase further. As shown in FIG. 22, the sharpness of the luminance distribution waveform steeply increases when the MTF area S1 of the aerial image R is greater than or equal to 12.7. Thus, the value of S1 may be greater than or equal to about 12.7. In this case, the ratio S1/S2 (S2 = 14.9) is greater than or equal to about 0.85.

As shown in FIG. 23, the sharpness of the luminance distribution waveform steeply decreases when the MTF area S1 of the aerial image R is less than 6. In other words, when the MTF area S1 of the aerial image R is greater than or equal to 6, the sharpness of the luminance distribution waveform is in the highest area of 0.68 or greater and asymptotic to about 0.7, which is the sharpness of the ideal aerial image. More specifically, when the value of S1 is greater than or equal to 6, the sharpness of the luminance distribution waveform is substantially constant at values approximate to about 0.7, which is the sharpness for the ideal aerial image. Thus, the value of S1 may be greater than or equal to 6. In this case, the ratio S1/S2 (S2 = 7.25) is greater than or equal to about 0.83.

The ratio S1/S2 may be greater than or equal to 0.85 based on the relationship shown in FIG. 22 in which the imaging device 7 has an F value of 3 and the relationship shown in FIG. 23 in which the imaging device 7 has an F value of 8.

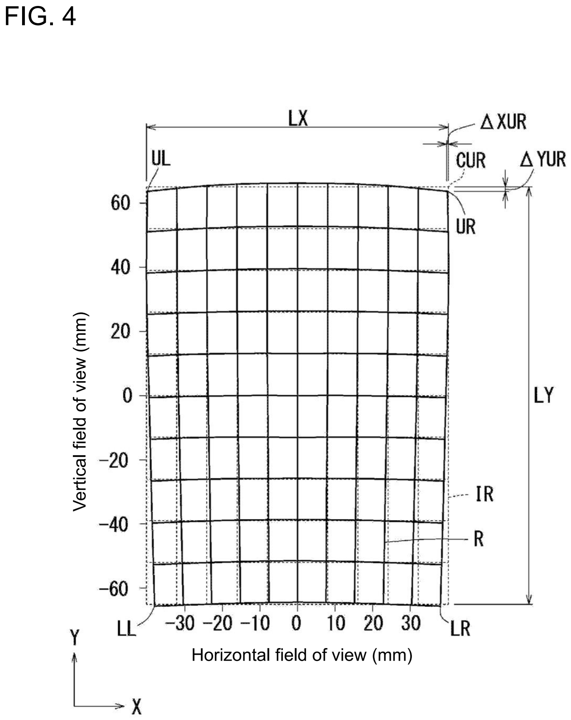

The aerial image display device 2 allows the aerial image R formed by the optical system 5 to have a distortion less than or equal to 5%. FIG. 4 is a diagram of a result of a simulation illustrating the aerial image R as viewed by the user 20 of the aerial image display device 2 in FIG. 1. In FIG. 4, to facilitate visual understanding of the distortion of the aerial image R, the aerial image R has a lattice pattern as indicated by the coordinate axes of a distortion direction and a distortion amount. In FIG. 4, the solid lines indicate the aerial image R as viewed by the user 20, and the broken lines indicate a virtual aerial image IR with no distortion. The aerial image R may be distorted in a planar direction (a direction parallel to the page of each figure) and in the depth direction (a direction perpendicular to the page of each figure), but FIG. 4 illustrates the distortion in the planar direction alone. Note that the X-direction is the horizontal direction and the Y-direction is the height direction in FIG. 4, unlike in FIGs. 1 and 2.

As illustrated in FIG. 4, the distortion of the aerial image R is likely to occur at the outer periphery of the aerial image R, and the distortion is likely to be greater specifically at the four corners (a lower right corner LR, an upper right corner UR, a lower left corner LL, and an upper left corner UL) of the aerial image R. Table 1 shows the distortions of the aerial image R at the corners LR, UR, LL, and UL relative to the aerial image IR. As shown in Table 1, the aerial image display device 2 reduces the distortion at each of the corners LR, UR, LL, and UL to within ±5%.

Table 1

|    | X-component | Y-component |
|----|-------------|-------------|
| LR | -5.0%       | 1.1%        |
| UR | -0.6%       | -2.2%       |
| LL | -5.0%       | 1.1%        |
| UL | -0.6%       | -2.2%       |

Note that a positive X-direction corresponds to rightward in FIG. 4, and a negative X-direction corresponds to leftward in FIG. 4. A positive Y-direction corresponds to upward in FIG. 4. A negative Y-direction corresponds to downward in FIG. 4. In each of the X-direction and the Y-direction in Table 1, any distortion of the aerial image R outward from the aerial image IR is indicated with a positive value, and any distortion of the aerial image R inward from the aerial image IR is indicated with a negative value. For example, for the lower right corner LR, the positive X-direction is outward (rightward or an expanding direction) in the X-direction, the negative X-direction is inward (leftward or a contracting direction) in the X-direction, the positive Y-direction is outward (downward or an expanding direction) in the Y-direction, and the negative Y-direction is inward (upward or a contracting direction) in the Y-direction. This also applies to the upper right corner UR, the lower left corner LL, and the upper left corner UL. This also applies to the distortions of the aerial image R shown in the tables below.

The distortions at the corners LR, UR, LL, and UL are calculated as described below. The distortion in the X-direction at each of the corners LR, UR, LL, and UL is defined by a deviation length in the X-direction from a length LX of an upper side of the aerial image IR having a rectangular shape (a lower side has the same length as the upper side). With the lower side of the aerial image IR having the same length as the length LX of the upper side, the length LX of the upper side is used as a reference length. For example, the distortion in the X-direction at the corner UR is defined as a deviation length $\Delta$XUR in the X-direction from an upper right corner CUR of the aerial image IR relative to the length LX of the upper side. More specifically, the distortion in the X-direction at the corner UR is defined as ($\Delta$XUR/LX) $\times$ 100 (%). The aerial image R is distorted inward from the aerial image IR at the corner UR in the X-direction. The distortion at the corner UR is thus indicated with a negative value. The distortions in the X-direction at the corners LR, LL, and UL are defined in the same manner as or in a similar manner to the above. For the aerial image IR having a shape other than a rectangular shape, the reference length in the X-direction may be an average length or a maximum length in the X-direction.

The distortion in the Y-direction at each of the corners LR, UR, LL, and UL is defined as a deviation length in the Y-direction relative to a length LY of a right side of the aerial image IR having a rectangular shape (a left side has the same length as the right side). With the left side of the aerial image IR having the same length as the length LY of the right side, the length LY of the right side is used as a reference length. For example, the distortion in the Y-direction at the corner UR is defined as a deviation length $\Delta$YUR in the Y-direction from the upper right corner CUR of the aerial image IR relative to the length LY of the right side. More specifically, the distortion in the Y-direction at the corner UR is defined as ($\Delta$YUR/LY) $\times$ 100 (%). The aerial image R is distorted inward from the aerial image IR at the corner UR in the Y-direction. The distortion at the corner UR is thus indicated with a negative value. The distortions in the Y-direction at the corners LR, LL, and UL are defined in the same manner as or in a similar manner to the above. For the aerial image IR having a shape other than a rectangular shape, the reference length in the Y-direction may be an average length or a maximum length in the Y-direction.

In the optical system 5 in the aerial image display device 2 illustrated in FIG. 1, the first concave mirror 5a has a curvature Sa that may be about 0.35 to 0.45, the convex mirror 5b has a curvature Sb that may be about 0.15 to 0.25, and the second concave mirror 5c has a curvature Sc that may be about 0.25 to 0.35. In this case, the distortion of the aerial image R can be reduced to less than or equal to 5%, and the area ratio S1/S2 can be greater than or equal to 0.85. In the optical system 5 in the aerial image display device 2 illustrated in FIG. 2, the first concave mirror 5d has a curvature Sd that may be about 0.2 to 0.3, and the second concave mirror 5e has a curvature Se that may be about 0.05 to 0.15. In this case, the distortion of the aerial image R can be reduced to less than or equal to 5%, and the area ratio S1/S2 can be greater than or equal to 0.85. Note that the curvatures Sa, Sb, Sc, Sd, and Se may vary based on, for example, the size, the shape, and the angle of field (spread of the light) of the display panel 4, and are thus not limited to the above ranges.

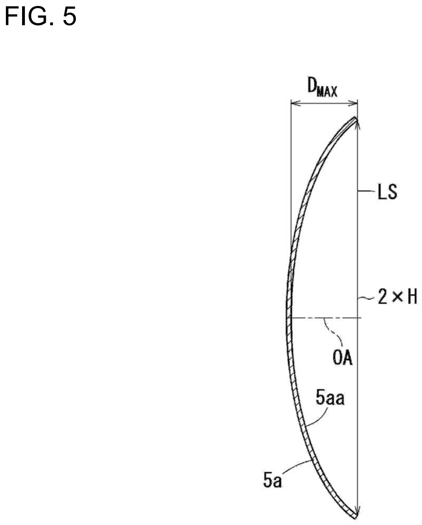

As illustrated in FIG. 5, the curvature Sa of the first concave mirror 5a is defined by a value of $D_{MAX}$/H, where $D_{MAX}$ is a maximum value of a length (also referred to as a maximum depth) in a direction along an optical axis OA between a point on a reflective surface 5aa of the first concave mirror 5a and a line segment LS. The line segment LS has a length of 2 $\times$ H. The line segment LS includes the central axis of the reflective surface 5aa and connects both ends of the reflective surface 5aa in a cross section taken along the optical axis of image light Lp incident on the first concave mirror 5a. Note that a maximum value of $D_{MAX}$/H among the values obtained at different cross-sectional positions may be defined as the curvature Sa. The curvatures Sb, Sc, Sd, and Se are also defined in the same manner as or in a similar manner to the curvature Sa.

The aerial image display device 2 allows the aerial image R formed by the optical system 5 to have a luminance level greater than or equal to 800 cd/m2. The aerial image display device 2 includes the optical system 5 including the reflectors alone and includes no optical member that transmits a part of incident light, such as a polarizing filter or a beam splitter. The aerial image display device 2 thus has a high use ratio of the image light Lp. The aerial image display device 2 can thus form the aerial image R with high luminance without increasing power consumption. The luminance of the aerial image R may be measured with a commercially available luminance meter. The luminance of the aerial image R may be measured with a luminance meter installed at the position (refer to FIG. 6) of the imaging device 7.

Calculation of the modulation transfer function of the aerial image R will now be described. The modulation transfer function of the aerial image R can be calculated using the measurement system 1. As illustrated in FIG. 6, the measurement system 1 includes the imaging device 7, a controller 8, and an obtainer 14.

The imaging device 7 is used as the eyes 20e (refer to FIGs. 1 and 2) of the user 20, and captures the aerial image R formed by the aerial image display device 2. The imaging device 7 is spaced from the aerial image display device 2 in the designed optical axis direction Dad of the aerial image display device 2. The imaging device 7 captures the aerial image R formed by the aerial image display device 2 in the designed optical axis direction Dad of the aerial image display device 2. The designed optical axis direction Dad refers to the designed optical axis direction of the aerial image R formed by the aerial image display device 2. The designed optical axis direction Dad may be, for example, perpendicular to the width direction of the housing 6, or perpendicular to an emitting surface of the image light emitting portion 6a. The aerial image display device 2 is located to have the designed optical axis direction Dad aligned with the depth direction. Note that the imaging device 7 has an imaging direction 7d not limited to the designed optical axis direction. The controller 8 may control a first rotator 12 to rotate the imaging device 7 about a predetermined rotation axis. In other words, the controller 8 may control the imaging device 7 to capture the aerial image R in a direction different from the designed optical axis direction (depth direction).

The imaging device 7 includes an image sensor. The image sensor may be, for example, a charge-coupled device (CCD) image sensor or a complementary metal-oxide semiconductor (CMOS) image sensor. The imaging device 7 may be a camera (e.g., a CCD camera) including multiple image sensors and an optical element such as an objective lens. In the imaging device 7, the aperture value (F value) may be changeable. In the imaging device 7, the aperture value may be changeable within a range of 2 to 22.

The controller 8 may function as a controller in the measurement system 1. The controller 8 may be connected to each of the components of the measurement system 1 to control the component. In calculating the modulation transfer function of the aerial image R, the controller 8 may also function as a controller in the aerial image display device 2. The controller 8 may control, for example, the aerial image R formed by the aerial image display device 2. The controller 8 may include one or more processors. The processors may include at least one of a general-purpose processor configured to read a specific program to perform a specific function or a processor dedicated to specific processing. The dedicated processor may include an application-specific integrated circuit (ASIC). The processors may include a programmable logic device (PLD). The PLD may include a field-programmable gate array (FPGA). The controller 8 may include at least one of a system on a chip (SoC) or a system in a package (SiP) in which one or more processors are configured to cooperate with one another.

The obtainer 14 may store image data of a captured image generated by the imaging device 7. When the imaging device 7 generates a captured image, the controller 8 may obtain image data of the captured image through the obtainer 14. When the imaging device 7 generates a captured image, the imaging device 7 may automatically output image data of the captured image to the obtainer 14. The obtainer 14 may be a temporary storage device such as a buffer memory. Signal transmission and reception between the controller 8 and the imaging device 7, signal transmission and reception between the obtainer 14 and the imaging device 7, and signal transmission and reception between the obtainer 14 and the controller 8 may be performed with at least one selected from the group consisting of, for example, a wired communication method, a wireless communication method, and an infrared communication method.

To calculate the modulation transfer function of the aerial image R, the controller 8 controls the aerial image display device 2 to form, in air, a test pattern (hereafter also simply referred to as an aerial image) 9 as illustrated in FIGs. 6 and 7. FIG. 7 illustrates the test pattern 9 without any blur (resolution degradation). The test pattern 9 may be a repetition pattern of a first strip image 9a and a second strip image 9b. The first strip image 9a and the second strip image 9b may be elongated in a vertical direction (the X-direction). The test pattern 9 may include at least three first strip images 9a. FIG. 7 illustrates an example of the first strip images 9a in white and the second strip images 9b in black, but these strip images are not limited to this example. The first strip image 9a and the second strip image 9b may differ from each other in at least one of the luminance or the color.

For the first strip image 9a and the second strip image 9b that are elongated in the vertical direction (the X-direction), the imaging device 7 may have its height direction (e.g., a direction perpendicular to an upper surface of the imaging device 7) tilted by about 3 to 5° about the rotation axis parallel to the depth direction (Z-direction). In this case, the number of samples obtained to calculate the modulation transfer function of the test pattern 9 can be increased, thus allowing accurate calculation of the modulation transfer function of the test pattern 9.

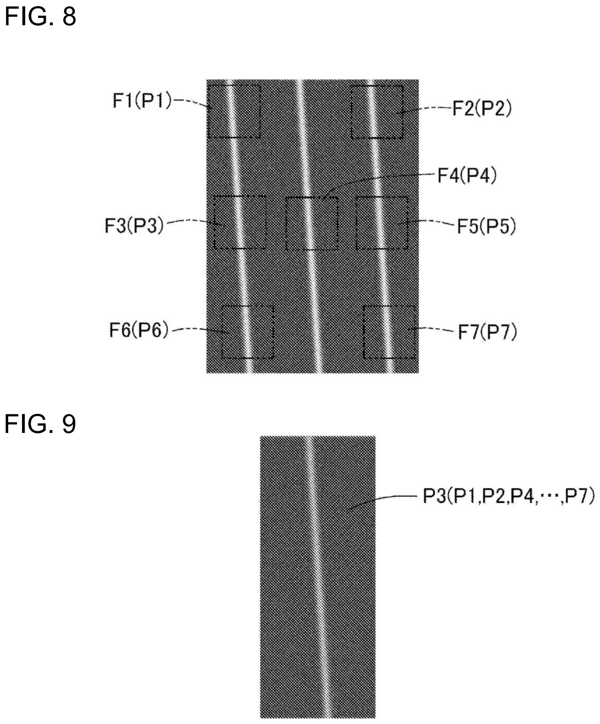

FIG. 8 is an overall view of an example of the test pattern 9 formed by the aerial image display device 2. The controller 8 controls the imaging device 7 to capture images of one or more imaging portions of the test pattern 9. The one or more imaging portions may be, for example, one or more of multiple imaging portions F1 to F7 illustrated in FIG. 8. The one or more imaging portions may be the multiple imaging portions F3 to F5 or the multiple imaging portions F1 to F7. In the example described below, the imaging device 7 captures images of the imaging portions F1 to F7 of the test pattern 9. Note that a range of values referred to herein as "one value to another value" intends to mean "the two values being inclusive."

In the test pattern 9, the imaging portion F4 may be located adjacent to the center of an imaging plane Rp (in the X-direction and the Y-direction) of the aerial image R. The imaging portions F3 to F5 may be aligned in a predetermined direction in the imaging plane Rp of the aerial image 9. The predetermined direction may be, but not limited to, the Y-direction (width direction). The predetermined direction may be the X-direction (the vertical direction or the height direction), or a direction tilted from the X-direction and the Y-direction (oblique direction). The imaging portions F1, F2, F6, and F7 may each be located at the corresponding one of the four corners of the test pattern 9 as illustrated in FIG. 8. Unless otherwise specified, the imaging portions F3 to F5 described hereafter are aligned in the Y-direction (width direction) in the imaging plane of the aerial image 9.

The imaging device 7 captures images of the multiple imaging portions F1 to F7 of the test pattern 9 and outputs image data of multiple captured images P1 to P7. The multiple captured images P1 to P7 are images of the respective multiple imaging portions F1 to F7. The test pattern 9 may allow each of the multiple captured images P1 to P7 to include at least one first strip image 9a (image portions being white in FIG. 7). The test pattern 9 may allow each of the multiple captured images P1 to P7 to include one first strip image 9a as illustrated in FIG. 9. This facilitates processing of the image data of the captured images P1 to P7, thus allowing accurate calculation of the modulation transfer function. Although FIG. 9 illustrates the captured image P3, the captured images P1, P2, and P4 to P7 are the same as or similar to the captured image P3.

The distance between the imaging device 7 and the test pattern 9 in the depth direction (Z-direction) may be a predetermined imaging distance (also referred to as an initial set distance). The initial set distance may be, for example, 300 to 700 mm, or 500 mm. The distance between the imaging device 7 and the aerial image 9 may be the distance between the imaging device 7 and a position adjacent to the center of the aerial image 9 (e.g., the imaging portion F4). The imaging device 7 has a predetermined fixed focal length. The predetermined focal length may match the initial set distance. Unless otherwise specified, the distance between the imaging device 7 and the aerial image 9 is hereafter the initial set distance. Note that the distance between the imaging device 7 and the aerial image 9 may or may not be fixed at the initial set distance. Although described in detail later, the controller 8 may control a mover 11 to change the distance between the imaging device 7 and the aerial image 9 from the initial set distance. In other words, the controller 8 may perform defocusing to cause the distance between the imaging device 7 and the aerial image 9 to be different from the focal length of the imaging device 7.

The controller 8 may control the imaging device 7 to set the aperture value to be greater than 3 or to be less than or equal to 3 when controlling the imaging device 7 to capture an image of the test pattern 9. The aperture value of the imaging device 7 can be set to a relatively large value (e.g., 8) to allow evaluation of the resolution of the test pattern 9 when the test pattern 9 is viewed with the eyes 20e of the user 20. The aperture value of the imaging device 7 can be set to a relatively small value (e.g., 3) to reduce (shorten) the depth of field (also referred to as the focal depth of field) of the imaging device 7. More specifically, this can reduce (narrow) the area in which a subject is in focus in the depth direction. This facilitates accurate measurement of the positions of subjects (more specifically, the multiple imaging portions F3, F4, and F5) in the depth direction, thus allowing accurate calculation of the modulation transfer function. This also allows accurate measurement of the optical axis deviation of the actual optical axis direction Da of the aerial image R formed by the aerial image display device 2 from the designed optical axis direction Dad of the aerial image R formed by the aerial image display device 2.

The controller 8 obtains the image data of the multiple captured images P1 to P7 from the imaging device 7 through the obtainer 14. The controller 8 scans, for the multiple captured images P1 to P7, luminance values of pixels aligned in the width direction (the lateral direction in FIG. 9), and performs binning to calculate luminance distribution waveforms LSF1 to LSF7 as shown in FIG. 10. The luminance distribution waveforms LSF1 to LSF7 are calculated based on the respective captured images P1 to P7. The luminance distribution waveforms LSF1 to LSF7 each have a pulsed profile showing a change in luminance at different positions in the Y-direction. The horizontal axis in FIG. 10 indicates a change in position in the Y-direction. In FIG. 10, the luminance distribution waveform has its highest value (peak value) at the position of the 30th pixel of the multiple pixels (e.g., 60 pixels) in the Y-direction. The luminance distribution waveform is also referred to as the LSF.

When the captured images P1 to P7 each include one first strip image 9a as illustrated in FIG. 9, the line spread functions LSF1 to LSF7 each substantially have a Gauss profile as shown in FIG. 10. A method for measuring the optical axis direction based on characteristic values of the LSFs is hereafter also referred to as an LSF method.

The controller 8 performs, as expressed by Formula 3 below, Fourier transform on each of the line spread functions LSF1 to LSF7 to calculate modulation transfer functions MTF1 to MTF7 similar to the first modulation transfer function K1 shown in FIG. 3. Note that the Fourier transform is, for example, the operation of transforming a function having a pulsed profile into a curve (e.g., a sinusoidal waveform curve, a cosine waveform curve, or a continuous curve as a combined form of the sinusoidal waveform curve and the cosine waveform curve) expressed by continuous values in the frequency range.

$$MTF(v) = \left| C \int_{-\infty}^{\infty} LSF(x) e^{-2\pi i x v} dx \right| \tag{3}$$

In Formula 3, LSF(x) collectively represents the line spread functions LSF1 to LSF7 as the functions at positions x in the respective captured images P1 to P7. MTF(v) collectively represents the modulation transfer functions MTF1 to MTF7 as the functions at spatial frequencies v. C is a constant for normalizing the MTF(0) to "1."

The MTF (v) is an index indicating the resolution based on the contrast of the captured images P1 to P7. For example, for a greater value of the modulation transfer function MTF4 at a higher spatial frequency v (about 6 to 16/mm), the distance between the imaging portion F4 and the imaging device 7 can be determined to be closer to the focal length of the imaging device 7. This also applies to the modulation transfer functions MTF 1 to MTF3 and MTF 5 to MTF 7. In Formula 3, the upper and lower limits in the interval of integration may be replaced with finite values. This can reduce the processing load of the controller 8. The modulation transfer functions MTF(v) may be calculated using Formula 3 with, for example, a discrete Fourier transform method or a fast Fourier transform method.

The controller 8 measures, as expressed by Formula 4 below, areas A1 to A7 obtained by integrating the respective modulation transfer functions MTF1 to MTF7 on the spatial frequency axis. In Formula 4, the interval of integration may be replaced with a finite interval (e.g., the range of 0 to 18/mm). This can reduce the processing load of the controller 8.

$$A = \left| \int_0^\infty MTF(v)dv \right| \qquad (4)$$

The controller 8 may use the average of the areas A1 to A7 as the area S1 of the first modulation transfer function K1. This allows evaluation of the average resolution across the entire aerial image R. The controller 8 may also use the weighted average of the areas A1 to A7 as the area S1 of the first modulation transfer function K1. In this case, the areas A3, A4, and A5 may be weighted by a greater degree. This allows evaluation of the resolution in a portion adjacent to the center of the aerial image R. The areas A1, A2, A6, and A7 may be weighted by a greater degree. This allows evaluation of the resolutions at the corners of the aerial image R. The controller 8 may use a minimum value $A_{MIN}$ of the areas A1 to A7 as the area S1 of the first modulation transfer function K1. This allows evaluation of the resolution across the entire aerial image R.

Each of the modulation transfer functions MTF1 to MTF7 may or may not be calculated by performing Fourier transform on the respective line spread functions LSF1 to LSF7. Each of the modulation transfer functions MTF1 to MTF7 may be directly calculated based on the image data of the respective captured images P1 to P7 using a chart method.

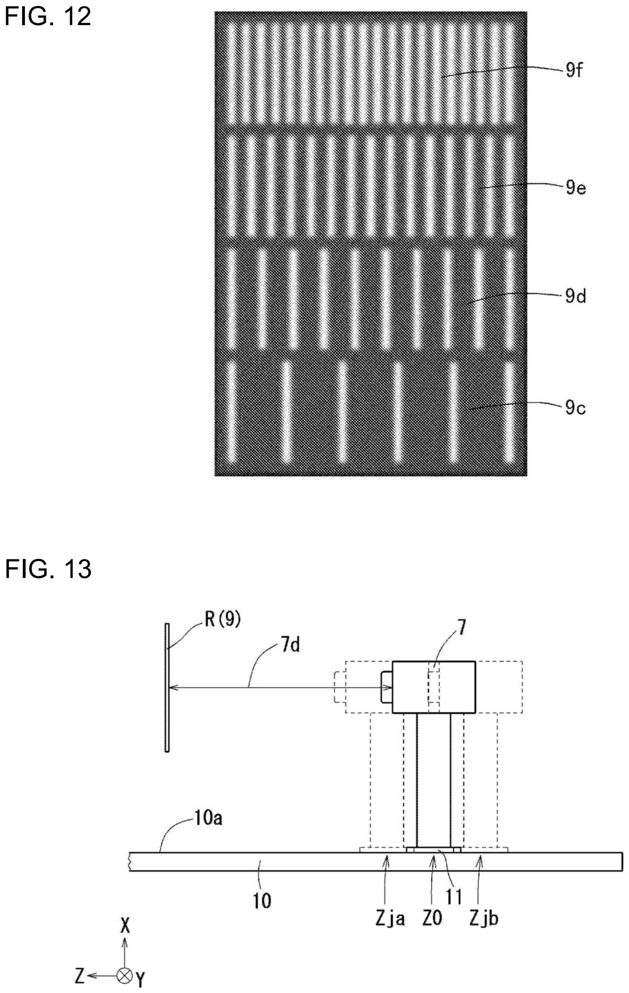

To calculate the modulation transfer functions MTF1 to MTF7 using the chart method, the controller 8 controls the aerial image display device 2 to form a test pattern (hereafter also simply referred to as an aerial image) 9' as illustrated in FIG. 11. Note that FIG. 11 illustrates an ideal aerial image 9' without any blur (resolution degradation) or optical axis deviation. In the aerial image 9', each of the imaging portions F1 to F7 includes multiple square wave charts 9c, 9d, 9e, and 9f each at a different spatial frequency (a pitch in a white strip image). Each of the captured images P1 to P7 thus includes the multiple square wave charts 9c to 9f each at a different spatial frequency $v$ as illustrated in FIG. 12. The controller 8 controls the imaging device 7 to capture the aerial image 9', generate the captured images P1 to P7 of the imaging portions F1 to F7, and output the image data of the captured images P1 to P7. The imaging device 7 may or may not be tilted with respect to an upper surface 10a of a device mount 10 when capturing the aerial image 9'. The controller 8 calculates, for each of the captured images P1 to P7, a maximum value av and a minimum value bv in luminance as well as a contrast ratio cv = (av - bv)/(av + bv) for a partial image of each of the square wave charts 9c to 9f. The controller 8 normalizes the contrast ratio cv at each of the spatial frequencies v using the contrast ratio cv at the lowest spatial frequency v, and calculates a square wave response function (SWRF). The controller 8 transforms the SWRF to a sinusoidal wave response function to calculate the modulation transfer functions MTF1 to MTF7. For transforming the SWRF to the sinusoidal wave response function, a Coltman's formula may be used. The Coltman's formula may be used up to the fourth term or to the twelfth term.

The method for calculating the first modulation transfer function of the aerial image 9 formed as a real image by the aerial image display device 2 has been described. The second modulation transfer function K2 of the ideal aerial image formed by the ideal optical system may be calculated by simulation. A simulated image simulating the ideal aerial image may be placed in the imaging plane Rp, and the second modulation transfer function may be calculated based on image data obtained by the imaging device 7 capturing the simulated image. The simulated image may be a repetition pattern of the first strip image 9a and the second strip image 9b, in the same manner as or in a similar manner to the test pattern 9 illustrated in FIGs. 7 and 8.

In the aerial image display device 2, for example, manufacturing tolerances or positioning errors of reflectors included in the optical system 5 may cause the optical axis direction Da of the aerial image R formed as a real image by the aerial image display device 2 to deviate from the designed optical axis direction Dad (hereafter also referred to as an optical axis deviation). The optical axis deviation may cause unevenness in display quality, such as luminance or resolution, of the aerial image R in the imaging plane Rp. This may cause inaccurate calculation of the modulation transfer functions MTF1 to MTF7. The measurement system 1 may be configured to measure the optical axis deviation of the aerial image display device 2. The measurement system 1 may be configured to calibrate the optical axis deviation of the aerial image display device 2.

The measurement system 1 for measuring the optical axis deviation of the aerial image display device 2 will now be described.

As illustrated in FIG. 6, the measurement system 1 may include the mover 11 that moves the imaging device 7 in the depth direction (Z-direction). The mover 11 is configured to move the imaging device 7 in increments of a predetermined distance $\Delta Z$. The predetermined distance $\Delta Z$ may be, for example, about 1 to 5 mm or about 1 to 2 mm. The mover 11 includes, for example, rails 11r, a holder (also referred to as a support) 11h, and a movable table (also referred to as a slider) 11t including an upper surface on which the holder 11h is located. The rails 11r are on the upper surface 10a of the device mount 10 and extend in the depth direction. The holder 11h supports and holds the imaging device 7. With the holder 11h holding the imaging device 7, the movable table 11t moves on the rails 11r in the depth direction. The controller 8 may control the movable table 11t to move in the depth direction.

As illustrated in FIG. 6, the measurement system 1 may include the first rotator 12 that rotates the imaging device 7 about a first rotation axis RA1. The first rotation axis RA1 may be parallel to a direction (e.g., the X-direction) perpendicular to the predetermined direction (e.g., the Y-direction) in which the imaging portions F3, F4, and F5 are aligned in the imaging plane Rp. The first rotation axis RA1 may be included in the imaging device 7. The first rotator 12 is configured to rotate the imaging device 7 in increments of a predetermined angle $\Delta\Theta$. The predetermined angle $\Delta\Theta$ may be, for example, about 0.1 to 2.0° or about 0.5 to 1°. The mover 11 may include the first rotator 12. For example, the first rotator 12 may be located between the movable table 11t and the holder 11h. The first rotator 12 may rotate the holder 11h in the mover 11 and the imaging device 7 held by the holder about the first rotation axis RA1. The first rotator 12 may rotate the imaging device 7 about the first rotation axis RA1 without rotating the holder 11h in the mover 11. The controller 8 controls the rotation of the imaging device 7 about the first rotation axis RA1. The first rotator 12 may be a stepper motor, a linear motor, an ultrasonic motor, or a manual rotator including a rotation adjuster such as a knob or a screw that is rotatable manually.

As illustrated in FIGs. 1 and 2, the aerial image display device 2 may include a second rotator 13 in the housing 6. The second rotator 13 collectively rotates the components 2a about a second rotation axis RA2. The second rotation axis RA2 may be parallel to the direction (e.g., the X-direction) perpendicular to the predetermined direction in which the imaging portions F3, F4, and F5 are aligned in the imaging plane Rp. The second rotator 13 may collectively rotate the components 2a about the second rotation axis RA2 without rotating the housing 6. The controller 8 controls the rotation of the aerial image display device 2 or the collective rotation of the components 2a about the second rotation axis RA2.

Measurement of Optical Axis Direction of Aerial Image

An operation of the measurement system 1 for measuring the actual optical axis direction Da of an image of the test pattern 9 formed by the aerial image display device 2 will now be described.

An operation of the measurement system 1 for measuring alignment or misalignment of the actual optical axis direction Da of the aerial image 9 with the imaging direction 7d of the imaging device 7 and measuring alignment or misalignment of the actual optical axis direction Da of the aerial image 9 with the designed optical axis direction Dad will be described first. The imaging direction 7d of the imaging device 7 may be an optical axis direction (also referred to as a central axis direction) of an objective lens in a camera or may be a direction perpendicular to an imaging surface of, for example, a CCD image sensor. The imaging direction 7d of the imaging device 7 may be a gaze direction of the eyes 20e of the user 20 directly facing the aerial image display device 2.

To measure alignment or misalignment of the actual optical axis direction Da of the aerial image 9 with the imaging direction 7d of the imaging device 7, the aerial image display device 2 is placed to directly face the imaging device 7. When the actual optical axis direction Da of the aerial image 9 is not aligned with the imaging direction 7d of the imaging device 7 (the actual optical axis direction Da deviates from the imaging direction 7d), the measurement system 1 can measure the amount of deviation of the optical axis direction Da from the imaging direction 7d using a method (described later) for translating the imaging device 7 back and forth in the depth direction (defocusing method) to measure the optical axis direction Da. The measurement system 1 can also rotate the imaging device 7 about the first rotation axis RA1 to have the imaging direction 7d aligned with the optical axis direction Da, allowing measurement of the optical axis direction Da and causing the aerial image display device 2 to directly face the imaging device 7 accurately.

Note that the actual optical axis direction Da may deviate from the imaging direction 7d in the height direction (X-direction) alone, in the width direction (Y-direction) alone, or in the height direction (X-direction) and the width direction (Y-direction). In each case, the directional deviation can be measured and adjusted to be eliminated.

When the measurement system 1 measures alignment or misalignment of the actual optical axis direction Da of the aerial image 9 with the designed optical axis direction Dad (refer to FIGs. 1 and 2) of the aerial image display device 2, the aerial image display device 2 is accurately placed to directly face the imaging device 7. For example, the aerial image display device 2 may be placed to have the image light emitting portion 6a of the aerial image display device 2 perpendicular to the imaging direction 7d of the imaging device 7. In this case, the imaging direction 7d is used as a predetermined imaging direction 7da (an imaging direction 7da aligned with the designed optical axis direction Dad). In other words, when no optical axis deviation is detected between the actual optical axis direction Da and the designed optical axis direction Dad, the amount of deviation of the optical axis direction Da from the imaging direction 7da is not measured. When an optical axis deviation is detected between the actual optical axis direction Da and the designed optical axis direction Dad, the amount of deviation of the optical axis direction Da from the imaging direction 7da is measured using the method (described later) for translating the imaging device 7 back and forth in the depth direction (defocusing method). The optical axis deviation of the optical axis direction Da from the designed optical axis direction Dad may be eliminated by, for example, adjusting the arrangement of the components 2a of the aerial image display device 2 or replacing the components 2a to align the optical axis direction Da with the designed optical axis direction Dad.

Note that the actual optical axis direction Da may deviate from the designed optical axis direction Dad in the height direction (X-direction) alone, in the width direction (Y-direction) alone, or in the height direction (X-direction) and the width direction (Y-direction). In each case, the directional deviation can be measured and adjusted to be eliminated.

An operation of the measurement system 1 for measuring alignment or misalignment of the actual optical axis direction Da of the aerial image 9 with the designed optical axis direction Dad in a plane perpendicular to the height direction (X-direction) based on the image data of the captured images P3 to P5 will now be described as a specific example, but the operation of the measurement system 1 is not limited to this example. Measurement of Optical Axis Direction Based on Characteristic Values of Line Spread Function in Luminance Distribution Waveform

As described above, the controller 8 obtains the image data of the multiple captured images P3 to P5 from the imaging device 7. The controller 8 calculates, based on the image data of the multiple captured images P3 to P5, luminance distribution waveforms LSF3 to LSF5 as shown in FIG. 10.

The controller 8 calculates characteristic values V3, V4, and V5 of the respective line spread functions LSF3 to LSF5. Characteristic values V1 to V7 herein refer to the characteristic values of the respective line spread functions LSF1 to LSF7. A characteristic value may be a peak value H of a line spread function, a half width W of the line spread function, or a ratio (hereafter also referred to as a width ratio W/Q) of the half width W to a quarter width Q of the line spread function (refer to FIG. 10). The peak value H is a maximum value of the line spread function. For example, for a greater peak value H of the line spread function LSF4 (for a peak value H closer to 1 in FIG. 10), the distance between the imaging portion F4 and the imaging device 7 can be determined to be closer to the focal length of the imaging device 7. For a greater peak value H of the line spread function LSF4, the resolution (contrast value) of the aerial image R can be determined to be higher. This also applies to the peak values H of the line spread functions LSF3 and LSF5.

The half width W corresponds to the width of the line spread function having the luminance substantially 50% of the peak value H. The half width W is indicated in units of pixels. For example, for a smaller half width W of the line spread function LSF4, the distance between the imaging portion F4 and the imaging device 7 can be determined to be closer to the focal length of the imaging device 7. This also applies to the half widths W of the line spread functions LSF3 and LSF5. For a smaller half width W of the line spread function LSF4, the resolution (contrast value) of the aerial image R can be determined to be higher.

The quarter width Q corresponds to the width of the line spread function having the luminance substantially 25% of the peak value H. The quarter width Q is indicated in units of pixels. For example, for a greater width ratio W/Q (for a width ratio W/Q closer to 1), the distance between the imaging portion F4 and the imaging device 7 can be determined to be closer to the focal length of the imaging device 7. This also applies to the width ratios W/Q of the line spread functions LSF3 and LSF5. For a greater width ratio W/Q, the resolution (contrast value) of the aerial image R can be determined to be higher.

A characteristic value may be a combination value obtained from a peak value H and a half width W. The combination value may be a value obtained by dividing the peak value H by the half width W, or may be another value. For the characteristic value being a combination value obtained by dividing the peak value H by the half width W, a greater combination value of the line spread function LSF4 allows determination that the distance between the imaging portion F4 and the imaging device 7 is closer to the focal length of the imaging device 7 and determination that the resolution (contrast value) of the aerial image R is higher. This also applies to the combination values of the line spread functions LSF3 and LSF5.

The controller 8 may calculate multiple differences (specifically, V3 - V4, V3 - V5, and V4 - V5) between the multiple characteristic values V3 to V5. The controller 8 may determine that the actual optical axis direction Da of the aerial image 9 is aligned with the depth direction (specifically, the designed optical axis direction Dad) when all of the absolute values of the multiple differences are less than or equal to a threshold T1. The controller 8 may determine that the optical axis direction Da of the aerial image 9 is not aligned with the depth direction when at least one of the absolute values of the multiple differences is greater than the threshold T1. The threshold T1 may be set as appropriate for the intended specifications of the aerial image display device 2.

For example, the controller 8 may determine that the optical axis direction of the aerial image 9 is aligned with the depth direction when the absolute values of the differences between the multiple characteristic values V3 to V5 being the peak values H or the width ratios W/Q are less than or equal to the threshold T1.

The controller 8 may determine that the optical axis direction Da of the aerial image 9 is aligned with the depth direction when all of the multiple characteristic values V3 to V5 being the peak values H or the width ratios W/Q are greater than or equal to a threshold T2. The controller 8 may determine that the optical axis direction Da of the aerial image 9 is not aligned with the depth direction when at least one of the characteristic values V3 to V5 being the peak values H or the width ratios W/Q is less than the threshold T2. The threshold T2 may be set as appropriate for the intended specifications of the aerial image display device 2.

The controller 8 may determine that the optical axis direction Da of the aerial image R is aligned with the depth direction when all of the characteristic values V3 to V5 being the half widths W are less than or equal to a threshold T3. The controller 8 may determine that the optical axis direction Da of the aerial image 9 is not aligned with the depth direction when at least one of the characteristic values V3 to V5 being the half widths W is greater than the threshold T3. The threshold T3 may be set as appropriate for the intended specifications of the aerial image display device 2, for example.

The measurement system 1 can systematically measure alignment or misalignment of the actual optical axis direction Da of the aerial image 9 with the designed optical axis direction Dad based on the characteristic values V3 to V5 of the respective line spread functions LSF3 to LSF5. The measurement system 1 can thus calibrate the optical axis direction Da of the aerial image R formed by the aerial image display device 2. More specifically, at least some of the components 2a of the aerial image display device 2 may be, for example, rearranged or replaced to align the actual optical axis direction Da with the designed optical axis direction Dad.

Measurement of Optical Axis Direction Based on Area of Modulation Transfer Function

The measurement system 1 can determine alignment or misalignment of the actual optical axis direction Da of the aerial image 9 with the imaging direction 7d or alignment or misalignment of the actual optical axis direction Da of the aerial image 9 with the designed optical axis direction Dad based on the areas of the modulation transfer functions (refer to FIG. 3). An operation of the measurement system 1 for determining alignment or misalignment of the actual optical axis direction Da of the aerial image 9 with the designed optical axis direction Dad based on the areas of the modulation transfer functions will now be described. A method for measuring the optical axis direction based on the areas of the modulation transfer functions (hereafter also referred to as MTF areas) is also referred to as an MTF area method.

The controller 8 performs, as expressed by Formula 3, Fourier transform on each of the line spread functions LSF3 to LSF5 calculated based on the respective captured images P3 to P5 to calculate the modulation transfer functions MTF3 to MTF5. The controller 8 measures MTF areas A3 to A5 obtained by integrating the respective modulation transfer functions MTF3 to MTF5 on the spatial frequency axis, as expressed by Formula 4. Note that the modulation transfer functions MTF3 to MTF5 may or may not be calculated by performing Fourier transform on the respective line spread functions LSF3 to LSF5. The modulation transfer functions MTF3 to MTF5 may be directly calculated based on the image data of the respective captured images P3 to P5 using the chart method.

The controller 8 may calculate multiple differences (specifically, A3 - A4, A3 - A5, and A4 - AS) between the multiple MTF areas A3 to A5. The controller 8 may determine that the actual optical axis direction Da of the aerial image 9 is aligned with the depth direction (designed optical axis direction Dad) when all of the absolute values of the multiple differences are less than or equal to a threshold T4. The controller 8 may determine that the optical axis direction of the aerial image 9 is not aligned with the depth direction when at least one of the absolute values of the multiple differences is greater than the threshold T4. The threshold T4 may be set as appropriate for the intended specifications of the aerial image display device 2.

The controller 8 may determine that the actual optical axis direction Da of the aerial image 9 is aligned with the depth direction when all of the MTF areas A3 to A5 are greater than or equal to a threshold T5. The controller 8 may determine that the actual optical axis direction Da of the aerial image 9 is not aligned with the depth direction when at least one of the MTF areas A3 to A5 is less than the threshold T5. The threshold T5 may be set as appropriate for the intended specifications of the aerial image display device 2.

The measurement system 1 can systematically measure alignment or misalignment of the actual optical axis direction Da of the aerial image 9 with the designed optical axis direction Dad based on the MTF areas A3 to A5. The areas of the modulation transfer functions are less likely to be susceptible to, for example, external light. The MTF areas A3 to A5 can thus be used to accurately measure alignment or misalignment of the actual optical axis direction Da of the aerial image 9 with the designed optical axis direction Dad. The measurement system 1 can thus accurately calibrate the actual optical axis direction Da of the aerial image R formed by the aerial image display device 2.

An operation of the measurement system 1 for measuring an optical axis deviation of the aerial image 9 (a deviation of the actual optical axis direction Da from the designed optical axis direction Dad) and calibrating the optical axis deviation of the aerial image display device 2 will now be described. The controller 8 may measure the optical axis deviation of the actual optical axis direction Da of the aerial image 9 from the designed optical axis direction Dad when determining that the actual optical axis direction Da of the aerial image 9 is not aligned with the designed optical axis direction (depth direction) Dad. The controller 8 may measure the optical axis deviation of the actual optical axis direction Da of the aerial image 9 from the designed optical axis direction Dad without determining alignment or misalignment of the actual optical axis direction Da of the aerial image 9 with the designed optical axis direction Dad.

Measurement of Optical Axis Deviation with Defocusing

An operation of the measurement system 1 for measuring the optical axis deviation by moving the imaging device 7 in the imaging direction 7d will now be described. As illustrated in FIG. 13, the controller 8 controls the mover 11 to move the imaging device 7 in the imaging direction 7d (Z-direction) to position the imaging device 7 at one of multiple positions each with a different coordinate (Z-coordinate) in the imaging direction 7d. The Z coordinates of the multiple positions are collectively represented by $Zj$, where $Zj = Z0 + j \times \Delta Z$. Z0 is an initial coordinate of the imaging device 7 in the imaging direction 7d and is the Z coordinate of the imaging device 7 when the distance between the imaging device 7 and the aerial image 9 is the initial set distance. The predetermined distance $\Delta Z$ may be, for example, about 0.1 to 5 mm or about 0.2 to 2 mm. The value j is an integer in the range of -m1 $\leq$ j $\leq$ m2 (m1 and m2 are natural numbers). The values m1 and m2 may be, but not limited to, natural numbers being 1 to 20.

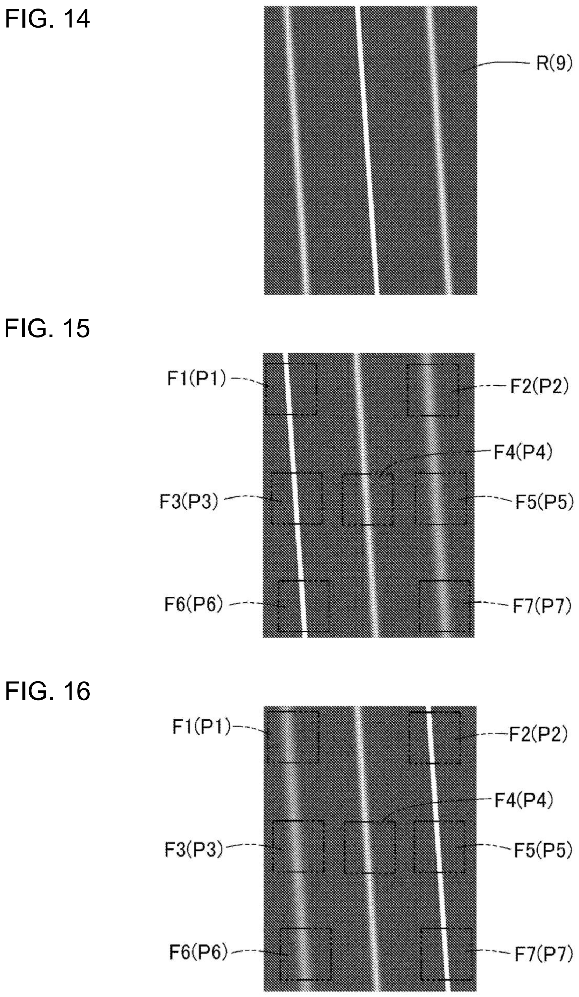

The controller 8 controls the imaging device 7 to capture the aerial image 9 in the imaging direction 7d at each of the positions with the Z-coordinates represented by Zj (-m1 $\leq$ j $\leq$ m2). FIG. 14 is an example of the aerial image 9 captured with the imaging device 7 at a position with the Z-coordinate of Z0. FIG. 15 is an example of the aerial image 9 captured with the imaging device 7 at a position with the Z-coordinate of Zja (ja is a positive integer). FIG. 16 is an example of the aerial image 9 captured with the imaging device 7 at a position with the Z-coordinate of Zjb (jb is a negative integer). The imaging device 7 has the focal length fixed at the initial set distance. The blurring of the imaging portions F3, F4, and F5 thus changes with the movement of the imaging device 7. The imaging device 7 outputs, to the controller 8, image data of (m1 + m2 + 1) captured images P3 to P5 for the respective imaging portions F3 to F5. The controller 8 obtains, from the imaging device 7, the image data of the (m1 + m2 + 1) captured images P3 to P5 for the respective imaging portions F3 to F5. The controller 8 may obtain the image data from the imaging device 7 through the obtainer 14.

Measurement of Optical Axis Deviation Based on Characteristic Value of Line Spread Function in Luminance Distribution Waveform

Measurement of an optical axis deviation of the aerial image 9 based on the characteristic values of the line spread functions will be described first. The controller 8 calculates, for the respective imaging portions F3 to F5, (m1 + m2 + 1) line spread functions LSF3, LSF4, and LSF5 based on the image data of the (m1 + m2 + 1) captured images P3 to P5 to calculate (m1 + m2 + 1) characteristic values V3 to V5. The characteristic values V3 to V5 hereafter are the peak values H of the respective line spread functions LSF3 to LSF5 or the combination values obtained by dividing the peak values H by the respective half widths W. The controller 8 calculates, for each of the imaging portions F3 to F5, a maximum value $V_{MAX}$ of the respective (m1 + m2 + 1) characteristic values V3 to V5, and calculates the Z-coordinate (hereafter also referred to as a focus position) of the imaging device 7 when each of the characteristic values V3 to V5 is the corresponding maximum value $V_{MAX}$.

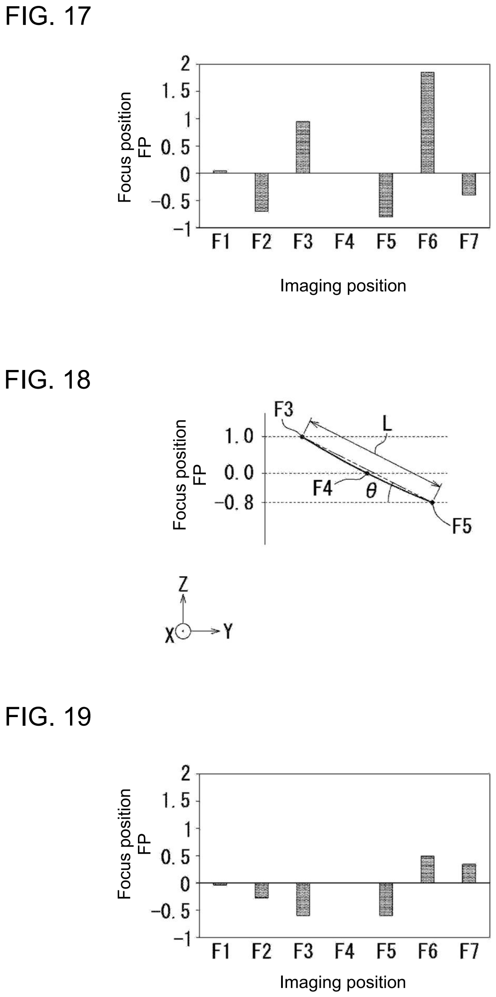

FIG. 17 is a graph showing focus positions FP3 to FP5 of the respective imaging portions F3 to F5. Note that focus positions FP1 to FP7 herein refer to the focus positions when the respective characteristic values V1 to V7 are each at the maximum value $V_{MAX}$. FIG. 17 also shows the focus positions FP1, FP2, FP6, and FP7 of the respective imaging portions F1, F2, F6, and F7. The focus positions FP1, FP2, FP6, and FP7 can be calculated in the same manner as or in a similar manner to the focus positions FP3 to FP5. In FIG. 17, the focus positions FP3 to FP5 of the respective imaging portions F3 to F5 are shown with the focus position FP4 of the imaging portion F4 as a reference position (0 mm). FIG. 17 shows the focus positions FP3 to FP5 of the respective imaging portions F3 to F5 with an optical axis deviation.

In FIG. 17, the focus position FP3 (+1.0 mm) of the imaging portion F3 and the focus position FP5 (-0.8 mm) of the imaging portion F5 have different signs. This indicates an optical axis deviation as illustrated in FIG. 18. More specifically, the focus position FP3 is 1.0-mm closer to the imaging device 7 from the focal length of the imaging device 7, and the focus position FP5 is 0.8-mm away from the imaging device 7 from the focal length of the imaging device 7. The controller 8 determines that the optical axis of the aerial image 9 deviates from the depth direction by an angle θ satisfying Formula 5 below when the focus position FP3 and the focus position FP5 have different signs.

$$\sin \theta = \frac{|FP3| + |FP5|}{L} \qquad (5)$$

In Formula 5, |FP3| is the absolute value of the focus position FP3, and |FP5| is the absolute value of the focus position FP5 (refer to FIG. 17). L is the designed length of the aerial image 9 in the width direction (Y-direction).

The controller 8 controls the second rotator 13 (refer to FIGs. 1 and 2), which collectively rotates the components 2a of the aerial image display device 2, to rotate the aerial image display device 2 about the second rotation axis RA2 by the angle θ when determining that the optical axis direction Da of the aerial image 9 deviates from the designed optical axis direction (depth direction) Dad by the angle θ. This calibrates the optical axis deviation of the aerial image R formed by the aerial image display device 2. This also allows the user to view the aerial image R of high display quality with a smaller optical axis deviation. The controller 8 controls the second rotator 13 to rotate the aerial image display device 2 clockwise or counterclockwise by the angle θ as viewed from above the device mount 10. The controller 8 may determine the rotation direction of the aerial image display device 2 based on the signs of the focus positions FP3 and FP5 to cause the optical axis direction Da of the aerial image 9 to be parallel to (or to align with) the designed optical axis direction Dad. The second rotator 13 may be a stepper motor, a linear motor, an ultrasonic motor, or a manual rotator including a rotation adjuster such as a knob or a screw that is rotatable manually.

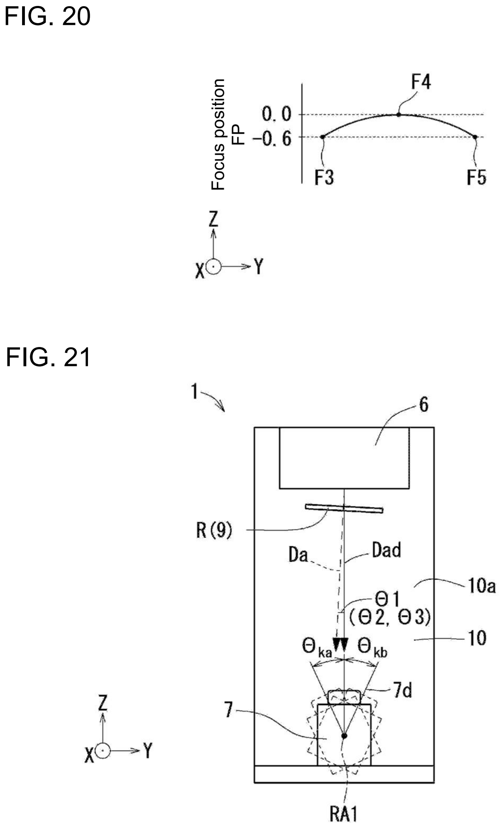

FIG. 19 shows the focus positions FP3 to FP5 of the respective imaging portions F3 to F5 without an optical axis deviation. FIG. 19 also shows the focus positions FP1, FP2, FP6, and FP7 of the respective imaging portions F1, F2, F6, and F7. The focus positions FP1, FP2, FP6, and FP7 can be calculated in the same manner as or in a similar manner to the focus positions FP3 to FP5. In FIG. 19, the focus position FP3 (-0.6 mm) of the imaging portion F3 and the focus position FP5 (-0.6 mm) of the imaging portion F5 have the same sign. This indicates occurrence of no optical axis deviation (or a smaller optical axis deviation), as illustrated in FIG. 20. The controller 8 determines that the actual optical axis direction Da of the aerial image 9 does not deviate from the designed optical axis direction (depth direction) Dad and does not rotate the components 2a of the aerial image display device 2 when the focus position FP3 and the focus position FP5 have the same sign.

The measurement system 1 performs the operation as described above when the peak values H or the combination values obtained by dividing the peak values H by the respective half widths W are used as the characteristic values V3 to V5 of the respective line spread functions LSF3 to LSF5. For the characteristic values V3 to V5 of the respective line spread functions LSF3 to LSF5 being the half widths W, the controller 8 calculates, for each of the imaging portions F3 to F5, a minimum value $V_{MIN}$ of the respective (m1 + m2 + 1) characteristic values V3 to V5, and sets the Z-coordinates of the imaging device 7 as the focus positions FP3 to FP5 when each of the characteristic values V3 to V5 is the corresponding minimum value $V_{MIN}$. The minimum value $V_{MIN}$ may be the same as or similar to the threshold T1.

The measurement system 1 performs defocusing on the imaging device 7 to systematically measure the optical axis deviation of the actual optical axis direction Da of the aerial image 9 from the designed optical axis direction Dad based on the characteristic values V3 to V5 of the respective line spread functions LSF3 to LSF5. The measurement system 1 can thus calibrate the optical axis direction Da of the aerial image R formed by the aerial image display device 2.

Measurement of Optical Axis Deviation Based on Area of Modulation Transfer Function

Measurement of an optical axis deviation (a deviation of the optical axis direction Da from the designed optical axis direction Dad) of the aerial image 9 based on the areas of modulation transfer functions will now be described. The controller 8 calculates, for the respective imaging portions F3 to F5, (m1 + m2 + 1) modulation transfer functions MTF3 to MTF5 based on the image data of the (m1 + m2 + 1) captured images P3 to P5 to measure (m1 + m2 + 1) MTF areas A3 to A5. The controller 8 calculates, for each of the imaging portions F3 to F5, a maximum value $A_{MAX}$ of the respective (m1 + m2 + 1) MTF areas A3 to A5, and calculates the Z-coordinate (each of the focus positions FP3 to FP5) of the imaging device 7 when each of the MTF areas A3 to A5 is the corresponding maximum value $A_{MAX}$.

The controller 8 can measure, based on the focus positions FP3 to FP5 when each of the MTF areas A3 to A5 is the corresponding maximum value $A_{MAX}$, the optical axis deviation (tilt angle θ) of the aerial image 9 and calibrate the optical axis deviation of the aerial image R formed by the aerial image display device 2. The operation of the measurement system 1 for measuring the optical axis deviation of the aerial image 9 based on the MTF areas A3 to A5 and calibrating the optical axis deviation of the aerial image is the same as or similar to the operation of the measurement system 1 for measuring the optical axis deviation of the aerial image 9 based on the characteristic values V3 to V5 and calibrating the optical axis deviation of the aerial image, and will not be described in detail.

The controller 8 calculates, for the respective imaging portions F3 to F5, (m1 + m2 + 1) line spread functions LSF3 to LSF5 based on the image data of the (m1 + m2 + 1) captured images P3 to P5 and performs Fourier transform on the (m1 + m2 + 1) line spread functions LSF3 to LSF5 to calculate the (m1 + m2 + 1) modulation transfer functions MTF3 to MTF5. The controller 8 may also calculate, for the respective imaging portions F3 to F5, the (m1 + m2 + 1) modulation transfer functions MTF3 to MTF5 based on the image data of the (m1 + m2 + 1) captured images P3 to P5 using the chart method.

The measurement system 1 performs defocusing on the imaging device 7 to systematically measure the optical axis deviation of the actual optical axis direction of the aerial image 9 from the designed optical axis direction based on changes in the MTF areas A3 to A5 resulting from the movement of the imaging device 7. As illustrated in FIG. 13, defocusing is performed by moving the imaging device 7 back and forth in the imaging direction 7d to change the degree of focus (the degree of being in focus or the degree of blurring of the captured image) in each of the imaging portions of the aerial image 9. The areas of the modulation transfer functions are less likely to be susceptible to, for example, external light. The MTF areas A3 to A5 can thus be used to accurately measure alignment or misalignment of the actual optical axis direction Da of the aerial image 9 with the designed optical axis direction Dad. The measurement system 1 can thus accurately calibrate the actual optical axis direction Da of the aerial image R formed by the aerial image display device 2.

Measurement of Optical Axis Deviation with Rotation

An operation of the measurement system 1 for measuring an optical axis deviation (a deviation of the optical axis direction Da from the designed optical axis direction Dad) by rotating the imaging device 7 about the first rotation axis RA1 will now be described. As illustrated in FIG. 21, the controller 8 controls the first rotator 12 to rotate the imaging device 7 about the first rotation axis RA1, allowing the imaging device 7 to capture aerial images 9 in multiple imaging directions 7d each having a different angle with the depth direction (Z-direction). The multiple imaging directions 7d and the depth direction (designed optical axis direction Dad) define angles collectively represented as Θk. The angle Θk is also referred to as an imaging angle. The angle Θk is expressed as Θk = k × ΔΘ. The predetermined angle ΔΘ may be, for example, about 0.1 to 2° or about 0.5 to 1°. The value k is an integer in the range of -n1 ≤ k ≤ n2 (n1 and n2 are natural numbers). The values n1 and n2 may be, but not limited to, natural numbers being 1 to 20. FIG. 21 illustrates the rotation angles of the imaging device 7 being Θka (ka is a positive integer) and Θkb (kb is a negative integer).

The controller 8 controls the imaging device 7 to capture the aerial image 9 in each direction having an imaging angle represented by Θk(-n1 ≤ k ≤ n2). The imaging device 7 outputs, to the controller 8, image data of (n1 + n2 + 1) captured images P3 to P5 for the respective imaging portions F3 to F5. The controller 8 obtains, from the imaging device 7, the image data of the (n1 + n2 + 1) captured images P3 to P5 for the respective imaging portions F3 to F5. The controller 8 may obtain the image data from the imaging device 7 through the obtainer 14.

Measurement of Optical Axis Deviation Based on Characteristic Value of Line Spread Function

Measurement of an optical axis deviation of the aerial image 9 based on the characteristic values of the line spread functions will be described first. The controller 8 calculates, for the respective imaging portions F3 to F5, (n1 + n2 + 1) line spread functions LSF3 to LSF5 based on the image data of the (n1 + n2 + 1) captured images P3 to P5 to calculate (n1 + n2 + 1) characteristic values V3 to V5. The characteristic values V3 to V5 may be the peak values H or the half widths W of the respective line spread functions LSF3 to LSF5. Each of the characteristic values V3 to V5 may be a combination value obtained by dividing the peak value H by the half width W.

The controller 8 may calculate, for each of the imaging angles Θk, multiple differences (specifically, V3 - V4, V3 - V5, and V4 - V5) between the characteristic values V3 to V5. The controller 8 may determine that the actual optical axis direction Da of the aerial image 9 is tilted by a tilt angle Θ1 from the depth direction (designed optical axis direction Dad) when, for an imaging angle Θ1, the absolute values of the multiple differences are less than or equal to a threshold T6. The threshold T6 may be set as appropriate for the intended specifications of the aerial image display device 2.

The controller 8 may determine that the actual optical axis direction Da of the aerial image is tilted by a tilt angle Θ2 from the designed optical axis direction Dad when, for an imaging angle Θ2, all of the characteristic values V3 to V5 being the peak values H or the width ratios W/Q are greater than or equal to a threshold T7. The threshold T7 may be set as appropriate for the intended specifications of the aerial image display device 2.

The controller 8 may determine that the actual optical axis direction Da of the aerial image is tilted by a tilt angle Θ3 from the designed optical axis direction Dad when, for an imaging angle Θ3, all of the characteristic values V3 to V5 being the half widths W are less than or equal to a threshold T8. The threshold T8 may be set as appropriate for the intended specifications of the aerial image display device 2.

The controller 8 controls the second rotator 13 to rotate the aerial image display device 2 about the second rotation axis RA2 by a rotation angle equal to the tilt angle Θ1, Θ2, or Θ3 when determining that the actual optical axis direction Da of the aerial image 9 deviates from the designed optical axis direction (depth direction) Dad by the tilt angle Θ1, Θ2, or Θ3. This calibrates the optical axis deviation of the aerial image R formed by the aerial image display device 2. This also allows the user to view the aerial image R of high display quality with a smaller optical axis deviation. The controller 8 controls the second rotator 13 to rotate the aerial image display device 2 clockwise or counterclockwise by a rotation angle equal to the tilt angle Θ1, Θ2, or Θ3 as viewed from above the device mount 10. The controller 8 may determine the rotation direction of the aerial image display device 2 to eliminate the optical axis deviation of the aerial image 9.

The measurement system 1 rotates the imaging device 7 to systematically measure the optical axis deviation of the actual optical axis direction Da of the aerial image 9 from the designed optical axis direction Dad based on changes in the characteristic values V3 to V5 resulting from the rotation of the imaging device 7. The measurement system 1 can thus calibrate the optical axis direction Da of the aerial image R formed by the aerial image display device 2.

Measurement of Optical Axis Deviation Based on Area of Modulation Transfer Function

Measurement of an optical axis deviation of the aerial image 9 based on the areas of modulation transfer functions will now be described. The controller 8 calculates, for the respective imaging portions F3 to F5, (n1 + n2 + 1) modulation transfer functions based on the image data of the (n1 + n2 + 1) captured images P3 to P5 to measure (n1 + n2 + 1) MTF areas A3 to A5.

The controller 8 may calculate, for each of the imaging angles Θk, multiple differences (specifically, A3 - A4, A3 - A5, and A4 - AS) between the multiple MTF areas A3 to A5. The controller 8 may determine that the actual optical axis direction Da of the aerial image 9 is tilted by a tilt angle Θ4 from the depth direction (designed optical axis direction Dad) when, for an imaging angle Θ4, the absolute values of the multiple differences are less than or equal to a threshold T9. The threshold T9 may be set as appropriate for the intended specifications of the aerial image display device 2.

The controller 8 may determine that the actual optical axis direction Da of the aerial image is tilted by a tilt angle Θ5 from the designed optical axis direction Dad when, for an imaging angle Θ5, all of the MTF areas A3 to A5 are greater than or equal to a threshold T10. The threshold T10 may be set as appropriate for the intended specifications of the aerial image display device 2.

The controller 8 calculates, for the respective imaging portions F3 to F5, (n1 + n2 + 1) line spread functions LSF3 to LSF5 based on the image data of the (n1 + n2 + 1) captured images P3 to P5 and performs Fourier transform on the (n1 + n2 + 1) line spread functions LSF3 to LSF5 to calculate (n1 + n2 + 1) modulation transfer functions MTF3 to MTF5. The controller 8 may also calculate, for the respective imaging portions F3 to F5, the (n1 + n2 + 1) modulation transfer functions MTF3 to MTF5 based on the image data of the (n1 + n2 + 1) captured images P3 to P5 using the chart method.

The measurement system 1 rotates the imaging device 7 to systematically measure the optical axis deviation of the actual optical axis direction Da of the aerial image 9 from the designed optical axis direction Dad based on the MTF areas A3 to A5. The areas of the modulation transfer functions MTF are less likely to be susceptible to, for example, external light. The MTF areas A3 to A5 can thus be used to accurately measure alignment or misalignment of the actual optical axis direction Da of the aerial image 9 with the designed optical axis direction Dad. The measurement system 1 can thus accurately calibrate the optical axis direction Da of the aerial image R formed by the aerial image display device 2.

The operation of the measurement system 1 for measuring an optical axis deviation in the height direction (X-direction) perpendicular to the width direction (Y-direction) based on the multiple captured images P3 to P5 of the multiple imaging portions F3 to F5 aligned in the width direction (Y-direction) in the imaging plane Rp of the aerial image 9, and calibrating the optical axis deviation has been described above. However the operation is not limited to the above example. The measurement system 1 can also measure an optical axis deviation in the width direction (Y-direction) perpendicular to the height direction (X-direction) based on multiple captured images (e.g., the multiple captured images P1, P3, and P6 or the multiple captured images P2, P5, and P7) of the multiple imaging portions (e.g., the multiple imaging portions F1, F3, and F6 or the multiple imaging portions F2, F5, and F7) aligned in the height direction (X-direction) in the imaging plane Rp of the aerial image 9, and calibrate the optical axis deviation. The measurement system 1 can also measure optical axis deviations in the height direction (X-direction) and the width direction (Y-direction) based on multiple captured images of the multiple imaging portions F1 to F7 in the imaging plane Rp of the aerial image 9, and calibrate these optical axis deviations. The line spread functions LSF1, LSF2, LSF6, and LSF7 can be calculated in the same manner as or in a similar manner to the line spread functions LSF3 to LSF5. The characteristic values V1, V2, V6, and V7 can be calculated in the same manner as or in a similar manner to the characteristic values V3, V4, and V5. The modulation transfer functions MTF1, MTF2, MTF6, and MTF7 can be calculated in the same manner as or in a similar manner to the modulation transfer functions MTF3, MTF4, and MTF5. The MTF areas A1, A2, A6, and A7 can be measured in the same manner as or in a similar manner to the MTF areas A3 to A5.

The measurement system 1 is used to measure an optical axis deviation and calibrate, when any optical axis deviation is detected, the optical axis deviation, thus allowing accurate calculation of the modulation transfer functions MTF1 to MTF7. The aerial image display device 2 can thus reduce resolution degradation.

The structure according to one or more embodiments of the present disclosure may have aspects (1) to (15) described below.

(1) An aerial image display device, comprising:

a display; and
an optical system configured to form an aerial image as a real image from image light emitted from the display, wherein a ratio S1/S2 is greater than or equal to 0.58, where S1 is an area obtained by integrating, on a spatial frequency axis, a first modulation transfer function of the aerial image formed by the optical system, and S2 is an area obtained by integrating, on the spatial frequency axis, a second modulation transfer function of an ideal aerial image formed by an ideal optical system being the optical system having a diffraction limited resolution.

(2) The aerial image display device according to aspect (1), wherein
the ratio S1/S2 is greater than or equal to 0.85.

(3) The aerial image display device according to aspect (2), wherein
the area S1 is greater than or equal to 6 when the aerial image is captured with an imaging device with an aperture value being set to 8 and the first modulation transfer function and the second modulation transfer function are normalized to a maximum value of 1.

(4) The aerial image display device according to aspect (2), wherein
the area S1 is greater than or equal to 12.7 when the aerial image is captured with an imaging device with an aperture value being set to 3 and the first modulation transfer function and the second modulation transfer function are normalized to a maximum value of 1.

(5) The aerial image display device according to any one of aspects (1) to (4), wherein
the aerial image has a distortion less than or equal to 5%.

(6) The aerial image display device according to aspect (5), wherein
the distortion of the aerial image is defined by a distortion at a corner of the aerial image, the corner of the aerial image is adjacent to an end of a side of the ideal aerial image having an ideal rectangular shape, and the distortion at the corner is expressed as a percentage value of a deviation length of the corner of the aerial image relative to the side of the ideal aerial image.

(7) The aerial image display device according to aspect (6), wherein

the distortion of the aerial image is defined by distortions at four corners of the aerial image.

(8) The aerial image display device according to aspect (6) or aspect (7), wherein

the distortion of the aerial image is greatest at four corners of the aerial image.

(9) The aerial image display device according to any one of aspects (1) to (8), wherein

the aerial image has a luminance level greater than or equal to 800 cd/m$^2$.

(10) The aerial image display device according to any one of aspects (1) to (9), wherein

the optical system includes

a first concave mirror configured to reflect, in a direction different from a direction toward the display, image light emitted from the display,

a convex mirror configured to reflect, in a direction different from a direction toward the first concave mirror, the image light reflected by the first concave mirror, and

a second concave mirror configured to reflect, in a direction different from a direction toward the convex mirror, the image light reflected by the convex mirror and form an aerial image as a real image from the image light.

(11) The aerial image display device according to aspect (10), wherein

each of the first concave mirror and the second concave mirror is a freeform concave mirror, and the convex mirror is a freeform convex mirror.

(12) The aerial image display device according to aspect (10) or aspect (11), wherein

the first concave mirror and the second concave mirror face each other in a manner tilted with respect to each other, and

the display is located between the first concave mirror and the second concave mirror, and the display includes a display surface being tilted with respect to a reflective surface of the first concave mirror by a lesser degree than with respect to a reflective surface of the second concave mirror.

(13) The aerial image display device according to any one of aspects (1) to (9), wherein

the optical system includes

a first concave mirror configured to reflect, in a direction different from a direction toward the display, image light emitted from the display, and

a second concave mirror configured to reflect, in a direction different from a direction toward the first concave mirror, the image light reflected by the first concave mirror and form an aerial image as a real image from the image light.

(14) The aerial image display device according to aspect (13), wherein

each of the first concave mirror and the second concave mirror is a freeform concave mirror.

(15) The aerial image display device according to aspect (13) or aspect (14), wherein

the first concave mirror has a greater curvature than the second concave mirror,

the first concave mirror and the second concave mirror face each other in a manner tilted with respect to each other, and

the display is located between the first concave mirror and the second concave mirror.

In one or more embodiments of the present disclosure, the aerial image display device can reduce degradation in the resolution of an aerial image. In one or more embodiments of the present disclosure, the aerial image display device can reduce distortion of an aerial image and also reduce lower luminance of the aerial image.

Although one or more embodiments of the present disclosure have been described in detail, the present disclosure is not limited to the embodiments described above, and may be changed or varied in various manners without departing from the spirit and scope of the present disclosure. One or more embodiments of the present disclosure include a structure combining two or more of the above embodiments.

REFERENCE SIGNS

| | |
|---|---|
| 1 | measurement system |
| 2 | aerial image display device |
| 2a | component |
| 3 | display |
| 4 | display panel |
| 4a | display surface |
| 4ai | virtual plane |
| 5 | optical system |
| 5a | first concave mirror |
| 5aa | reflective surface |
| 5ai | virtual plane |
| 5ap | vertex |
| 5ar | reflective surface (first reflective surface) |
| 5b | convex mirror |
| 5c | second concave mirror |
| 5ci | virtual plane |
| 5cp | vertex |
| 5cr | reflective surface (second reflective surface) |
| 5d | first concave mirror |
| 5e | second concave mirror |
| 6 | housing |
| 6a | image light emitting portion |
| 7 | imaging device |
| 7d | imaging direction |
| 7da | imaging direction |
| 8 | controller |
| 9, 9' | test pattern (aerial image) |
| 9a | first strip image |
| 9b | second strip image |
| 9c | square wave chart |
| 10 | device mount |
| 10a | upper surface |
| 11 | mover |
| 11h | holder |
| 11r | rail |
| 11t | movable table |
| 12 | first rotator |
| 13 | second rotator |
| 14 | obtainer |
| 20 | user |
| 20e | eye |
| Da | optical axis direction of aerial image |
| Dad | designed optical axis direction |
| Lp | image light |
| F1 to F7 | imaging portion |
| P1 to P7 | captured image |
| R | aerial image |
| Rp | imaging plane |

**Claims**

**1.** An aerial image display device, comprising:

a display; and

an optical system configured to form an aerial image as a real image from image light emitted from the display, wherein a ratio S1/S2 is greater than or equal to 0.58, where S1 is an area obtained by integrating, on a spatial frequency axis, a first modulation transfer function of the aerial image formed by the optical system, and S2 is an area obtained by integrating, on the spatial frequency axis, a second modulation transfer function of an ideal aerial image formed by an ideal optical system being the optical system having a diffraction limited resolution.

2. The aerial image display device according to claim 1, wherein
the ratio S1/S2 is greater than or equal to 0.85.

3. The aerial image display device according to claim 2, wherein
the area S1 is greater than or equal to 6 when the aerial image is captured with an imaging device with an aperture value being set to 8 and the first modulation transfer function and the second modulation transfer function are normalized to a maximum value of 1.

4. The aerial image display device according to claim 2, wherein
the area S1 is greater than or equal to 12.7 when the aerial image is captured with an imaging device with an aperture value being set to 3 and the first modulation transfer function and the second modulation transfer function are normalized to a maximum value of 1.

5. The aerial image display device according to any one of claims 1 to 4, wherein
the aerial image has a distortion less than or equal to 5%.

6. The aerial image display device according to claim 5, wherein
the distortion of the aerial image is defined by a distortion at a corner of the aerial image, the corner of the aerial image is adjacent to an end of a side of the ideal aerial image having an ideal rectangular shape, and the distortion at the corner is expressed as a percentage value of a deviation length of the corner of the aerial image relative to the side of the ideal aerial image.

7. The aerial image display device according to claim 6, wherein
the distortion of the aerial image is defined by distortions at four corners of the aerial image.

8. The aerial image display device according to claim 6 or claim 7, wherein
the distortion of the aerial image is greatest at four corners of the aerial image.

9. The aerial image display device according to any one of claims 1 to 8, wherein
the aerial image has a luminance level greater than or equal to 800 cd/m$^2$.

10. The aerial image display device according to any one of claims 1 to 9, wherein

the optical system includes
a first concave mirror configured to reflect, in a direction different from a direction toward the display, image light emitted from the display,
a convex mirror configured to reflect, in a direction different from a direction toward the first concave mirror, the image light reflected by the first concave mirror, and
a second concave mirror configured to reflect, in a direction different from a direction toward the convex mirror, the image light reflected by the convex mirror and form an aerial image as a real image from the image light.

11. The aerial image display device according to claim 10, wherein

each of the first concave mirror and the second concave mirror is a freeform concave mirror, and
the convex mirror is a freeform convex mirror.

12. The aerial image display device according to claim 10 or claim 11, wherein

the first concave mirror and the second concave mirror face each other in a manner tilted with respect to each other, and
the display is located between the first concave mirror and the second concave mirror, and the display includes a display surface being tilted with respect to a reflective surface of the first concave mirror by a lesser degree than with respect to a reflective surface of the second concave mirror.

13. The aerial image display device according to any one of claims 1 to 9, wherein

the optical system includes
a first concave mirror configured to reflect, in a direction different from a direction toward the display, image light emitted from the display, and
a second concave mirror configured to reflect, in a direction different from a direction toward the first concave mirror, the image light reflected by the first concave mirror and form an aerial image as a real image from the image light.

14. The aerial image display device according to claim 13, wherein
each of the first concave mirror and the second concave mirror is a freeform concave mirror.

15. The aerial image display device according to claim 13 or claim 14, wherein

the first concave mirror has a greater curvature than the second concave mirror,
the first concave mirror and the second concave mirror face each other in a manner tilted with respect to each other, and
the display is located between the first concave mirror and the second concave mirror.

FIG. 1

FIG. 2

FIG. 3

# FIG. 4

FIG. 5

FIG. 6

FIG. 7

FIG. 8

F1(P1) --- F2(P2)

F4(P4)

F3(P3) --- F5(P5)

F6(P6) --- F7(P7)

FIG. 9

P3(P1,P2,P4,···,P7)

FIG. 10

FIG. 11

FIG. 12

FIG. 13

FIG. 14

R(9)

FIG. 15

F1(P1)
F2(P2)
F4(P4)
F3(P3)
F5(P5)
F6(P6)
F7(P7)

FIG. 16

F1(P1)
F2(P2)
F4(P4)
F3(P3)
F5(P5)
F6(P6)
F7(P7)

FIG. 17

FIG. 18

FIG. 19

FIG. 20

FIG. 21

FIG. 22

S1 (F = 3, S2 =14.9)
S1/S2

FIG. 23

S1 (F = 8, S2 =7.25)
S1/S2

## INTERNATIONAL SEARCH REPORT

| International application No. |
| --- |
| **PCT/JP2024/021243** |

### A. CLASSIFICATION OF SUBJECT MATTER

*G02B 30/56*(2020.01)i; *G02B 17/00*(2006.01)i
FI:  G02B30/56; G02B17/00

According to International Patent Classification (IPC) or to both national classification and IPC

### B. FIELDS SEARCHED

Minimum documentation searched (classification system followed by classification symbols)

G02B30/56; G02B17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2020-177221 A (KUBOTA, Youji) 29 October 2020 (2020-10-29)<br>paragraphs [0032]-[0040], fig. 3A | 1-15 |
| A | JP 2000-66131 A (HARNESS SYST TECH RES LTD.) 03 March 2000 (2000-03-03)<br>paragraphs [0018]-[0019], fig. 3 | 1-15 |
| A | WO 2023/022024 A1 (KYOCERA CORPORATION) 23 February 2023 (2023-02-23)<br>paragraph [0023], fig. 1 | 14 |
| A | JP 2022-140896 A (OMRON CORPORATION) 29 September 2022 (2022-09-29)<br>paragraphs [0035]-[0068], fig. 1-7 | 1-15 |
| A | JP 2020-144281 A (OMRON CORPORATION) 10 September 2020 (2020-09-10)<br>paragraphs [0025]-[0057], fig. 1-8 | 1-15 |

☐ Further documents are listed in the continuation of Box C.          ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **17 July 2024** | **06 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/021243**

| Patent document cited in search report | | | Publication date (day/month/year) | Patent family member(s) | Publication date (day/month/year) |
|---|---|---|---|---|---|
| JP | 2020-177221 | A | 29 October 2020 | (Family: none) | |
| JP | 2000-66131 | A | 03 March 2000 | (Family: none) | |
| WO | 2023/022024 | A1 | 23 February 2023 | (Family: none) | |
| JP | 2022-140896 | A | 29 September 2022 | US 2022/0291440 A1 paragraphs [0053]-[0088], fig. 1-7 DE 102022103072 A1 CN 115079437 A | |
| JP | 2020-144281 | A | 10 September 2020 | (Family: none) | |

Form PCT/ISA/210 (patent family annex) (July 2022)

**REFERENCES CITED IN THE DESCRIPTION**

**Patent documents cited in the description**

• JP 2011253128 A